# EUROPEAN PATENT APPLICATION

(11) **EP 2 159 742 A1**
(43) Date of publication of application: **03.03.2010**
(21) Application number: 08425582.7
(22) Date of filing: 29.08.2008
(51) Int. Cl.: G06Q 10/00, G06Q 30/00

(54) **Dynamic order workflow template instantiator and decoupler**

(71) Applicant: Accenture Global Services GmbH, 8200 Schaffhausen (CH)
(72) Inventor: Gandini, Stefano, 06400 Cannes (FR); Celinák, Juraj, Bratislava (SK); Cascio, Calogero, 20141 Milan (IT); Montesissa, Marco, 20142 Milan (IT)
(74) Representative: Müller-Boré & Partner Patentanwälte

(57) **Abstract**

An application integration system greatly improves the configurability and efficiency of integration of multiple disparate applications, such as those found in telecommunications service provider architecture. The application integration system disassembles messages into component parts and dynamically rebuilds the component parts into a target message compatible with a target system. The application integration system employs a highly configurable configuration mechanism that can be modified on the fly and adapted to meet the requirements of any number of different applications that may need to communicate across the telecommunications service provider architecture.

## Description

### BACKGROUND OF THE INVENTION

### 1. Technical Field.

This application relates to application integration, and more particularly relates to a message processing system supporting the integration of multiple applications such as those implemented by a telecommunication service provider.

### 2. Related Art.

The telecommunications industry continues to face demands for more services, and rapid deployment of new services, while the complexity of the underlying technologies providing the services continues to increase. Multiple support systems and applications communicate through a complex web of connections to define, implement, and support the services for both residential and commercial consumers. The crucial role of the architecture underlying the service provider is evident upon consideration that in the multi-billion dollar telecommunications industry, consumers choose and assess service providers based on the number of available services, the reliability of the services, and the ability of the service provider to respond to customer requests for additional services and for troubleshooting existing services.

Integrating the applications in the architecture of a telecommunication service provider involves many complex and technical details, and often results in custom, complex, and hard to maintain architectures. In the past, the architectures often used customized point-to-point connections, message formats, and message translation techniques, between multiple support systems and the applications running on the support systems. The point-to-point connections created a tangled web of unique communication channels that created immense challenges with respect to implementation, upgrading, and maintenance. The complexity of the products and services also leads to further technical challenges to adding, expanding, or adapting services in the telecommunications architecture. Consequently, overall man-machine interaction is improved and a user is relieved from the mental task of determining, ordering, and/or finishing of complex product requests, wherein the system also supports the user in more easily and more efficiently monitoring an execution status at each stage of task execution.

One of the significant complexities lies in finding a way to allow the multiple support systems and applications to communicate with one another in a way that efficiently supports execution of complex service orders that require multiple systems to cooperate and interact. Thus, the technical challenges include providing a service processing architecture that provides efficient, robust, and fault tolerant service request orchestration and message handling through capable message communication between disparate applications. The already immense number of products, services, applications, and interacting systems further increase the burden of finding a technical solution to robust service order processing.

### SUMMARY

The dynamic order workflow template instantiator and decoupler system ("system") carries out service order decomposition. The system receives a service order structure and generates a non-hierarchical product list from the service order structure. The non-hierarchical product list may be generated by decomposing the service order structure into individual product-action entries that make up the non-hierarchical product list.

In addition, the system selects the individual product-action entries from the non-hierarchical product list and locates in a vectorization file or other configuration file a task sequence list matching the first individual product-action entry. The individual product-action entries specify target systems and tasks for implementation of the individual product-action entries. The method then creates extended product vectors for implementing the individual product-action entries. Each extended product vector may include a target system identifier, a target system priority, a task identifier, and a task priority specified by the task sequence list. There may be one or more extended product vectors that are generated to implement any given product-action entry.

The system writes the extended product vectors as individual rows in an order execution database. Pollers on the order execution database retrieve the individual rows in a priority controlled order and initiate execution of the specified tasks on the specified target systems. The pollers also account for task dependencies, ensuring that superior tasks are completed prior to dependent child tasks. The target systems return results of execution of the tasks, and a database update process responsively updates execution status in the order execution database.

The system may further include multiple aspect task tracking. Such tracking may include an external identifier aspect of tracking tasks by highly configurable external identifiers. Another aspect, an error aspect, includes tracking errors that occur as the target systems attempt to execute tasks, and categorizing those errors into groups. The multiple aspect tracking provides detailed insight into the status of each task, helping to solve the technical problem of implementing orderly execution of complex product requests while maintaining a transparent view of execution status at each stage of task execution. The multiple aspect task tracking features also eliminate the burden of manually searching through complex log files to determine task status. Furthermore, the distinction of errors into groups facilitates customized handling of different types of errors. Accordingly, the system may implement different error resolution paradigms responsive to the error group assigned to an error. Such processing helps solve the technical challenge of determining and executing the appropriate corrective action for any given error.

Other systems, methods, features and advantages will be, or will become, apparent to one with skill in the art upon examination of the following figures and detailed description. All such additional systems, methods, features and advantages are included within this description, are within the scope of the invention, and are protected by the following claims.

### BRIEF DESCRIPTION OF THE DRAWINGS

The system may be better understood with reference to the following drawings and description. The elements in the figures are not necessarily to scale, emphasis instead being placed upon illustrating the principles of the type model. In the figures, like-referenced numerals designate corresponding features throughout the different views.

Figure 1 shows the decomposition operation of the dynamic order workflow template instantiator and decoupler.

Figure 2 shows a dynamic order workflow template instantiator and decoupler system.

Figure 3 shows an order execution database.

Figure 4 shows a target system view.

Figure 5 shows a flow diagram of logic that a dynamic order workflow template instantiator and decoupler system may employ to decompose complex hierarchical service order structures.

Figure 6 shows a flow diagram for poller logic that monitors a service order database and submits tasks execution requests to target systems.

Figure 7 shows a flow diagram for composer logic that may reconstruct a hierarchical service order from individual extended product vectors.

Figure 8 shows a flow diagram for composer mapper logic.

Figure 9 shows a flow diagram for database update logic.

Figure 10 shows a flow diagram of processing executed by several entities interacting in the dynamic order workflow template instantiator and decoupler system.

Figure 11 shows an example common data model schema for a service order provisioning structure.

Figure 12 shows an example of a hardware diagram of a processing system that may implement the dynamic order workflow template instantiator and decoupler system.

Figure 13 shows a dynamic order workflow template instantiator and decoupler system with tracking console.

Figure 14 shows a flow diagram for multiple aspect task tracking.

### DETAILED DESCRIPTION OF THE PREFERRED EMBODIMENTS

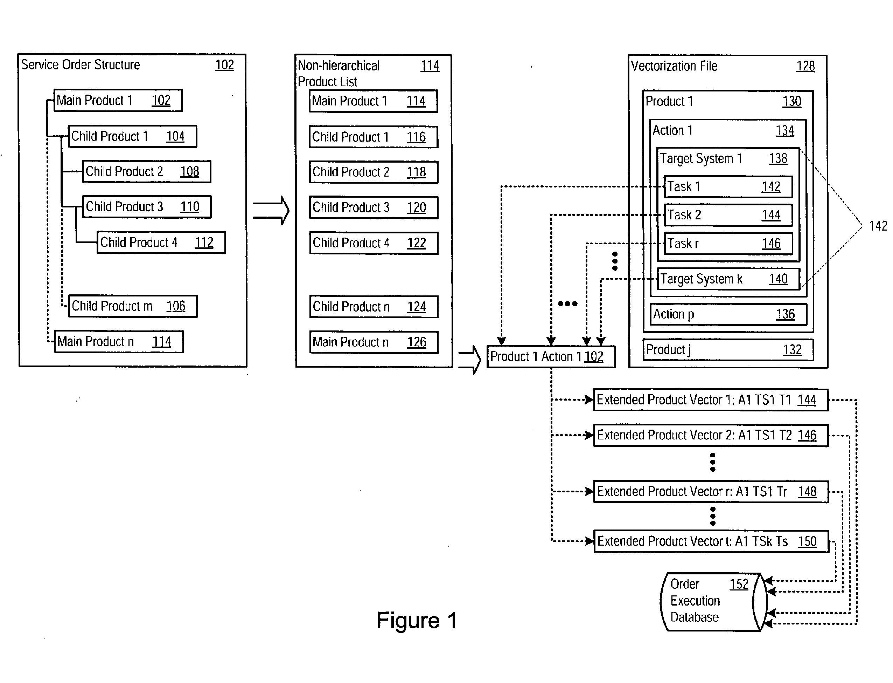

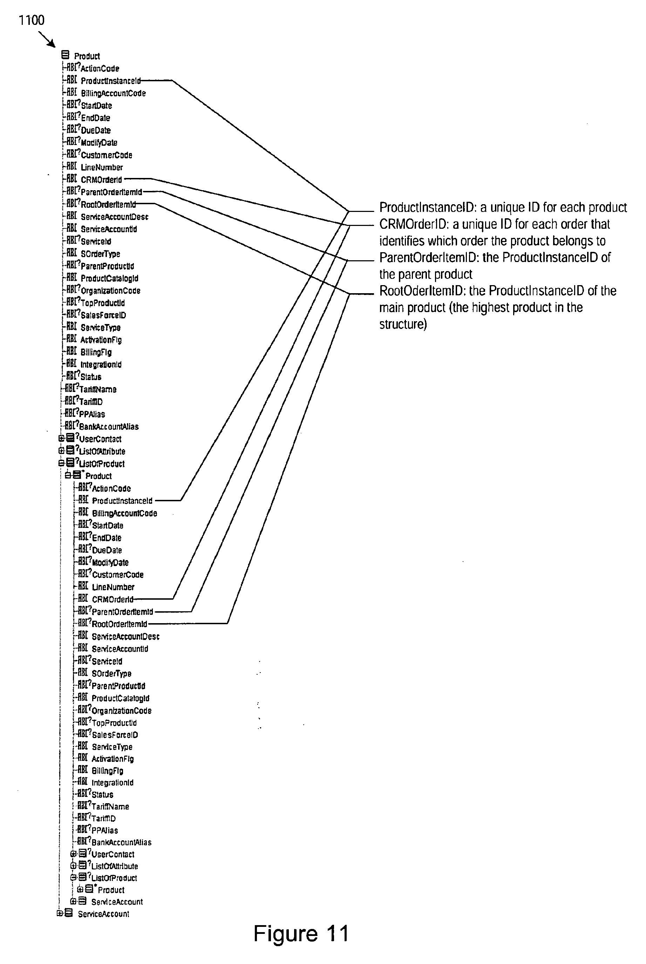

Figure 1 shows the decomposition operation of a dynamic order workflow template instantiator and decoupler system ("system"). The system is implemented with the hardware and software components described further below. The system receives a service order structure 102. The service order structure 102 may be encoded in an extensible Markup Language (XML) document, or other type of encoding or file, and may adhere to a particular service order schema. One example of a service order schema is shown in Figure 11.

The service order structure 102 may arrive at the system as a service order business event having a hierarchical structure in which main products may have nested sequences of child products. The service order structure 102 shown in Figure 1 includes main products 1 through n, labeled 102 and 114, with nested child products 1 through 'm', labeled 104 and 106. The child product 1 104 has two nested child products 2 and 3, labeled 108 and 110. The child product 3 110 has a further nested child product 4, labeled 112. The nesting may continue to arbitrary depth. Although complex service order structures 102 may have hierarchical structure, a hierarchical structure is not mandatory in the service order structure 102.

The service order structure 102 may represent, for example, a SIM card activation as the main product, with nested companion products including Internet Access, text message service, and Short Message Service (SMS). The service order structure 102 may represent any other product or service, or combination of products or services, however. Furthermore, the service order structures 102 (and target system processing described below) are not limited to telecommunications products and services. Instead, the service order structures 102 may represent orders for products and services in other industries. As one example, the main product may be an order for a computer system, specifying child products including a video card, memory, processor, and hard drive, with a sub product of the hard drive including the Windows XP (TM) operating system, and Word (TM), Excel (EM), and the World of Warcraft (TM) game as pre-configured software. As another example, the service order structure 102 may represent the purchase of a new car including the car itself as the main product, with child products including a DVD player (with a remote control sub-product), navigation system, and a heated leather seats.

The system generates a non-hierarchical product list 114 from the service order structure 102. To that end, the system decomposes the service order structure 102 into individual product-action entries 114, 116, 118, 120, 122, 124, and 126 that make up the non-hierarchical product list 114.

In one implementation, the system employs the XPath language to parse through the service order structure 102 by issuing queries against the service order structure 102 that locate each instance of a product and action specified in the service order structure 102. The system thereby locates each individual product in the complex service order structure 102. The system then adds individual products as individual product-action entries 114 - 126 in the non-hierarchical product list 114. The non-hierarchical product list 114 may be encoded in an XML document, or other file, adhering to a particular product list schema. One example of a product list schema for the non-hierarchical product list 114 is shown in the Product List Schema Table, below.

The system selects individual product-action entries from the non-hierarchical product list 114. The product-action entries may include, for example, product identifiers (e.g., Mobile Service) and action identifiers (e.g., Activate, Suspend, Modify, or Delete). The system generates, from the product-action entries, individual extended product vectors that separately encode each task on each system for implementing the product and action specified in the product-action entry. The system searches a vectorization file 128 as one step in preparing the extended product vectors.

The vectorization file 128 may include a sequence one or more of product structures and one or more action type structures within each product structure. In the example shown in Figure 1, the vectorization file 128 includes the product structures 1 through 'j', labeled 130 and 132. Within the product structure 1 130, there are the action type structures 1 through 'p', labeled 134 and 136. Each action type structure may specify one or more target systems, each of which may further specify one or more tasks for execution on the specific target system. Figure 1 shows target systems 1 through 'k', labeled 138 and 140. Within target system 1 (138), Figure 1 shows Tasks 1 and 2 through 'r', labeled 142, 144, and 146. Accordingly, for product 1 (130) and action 1 (134), the provisioning tasks include task 1 (142), task 2 (144), through task 'n' (146) on the target system 1 (138), and potentially other tasks on other target systems. The vectorization file 128 may include additional information, including target system, task, and action priorities, and may adhere to the vectorization schema shown in the Vectorization File Schema Table, below, or other schemas.

The system locates in the vectorization file 128 a task sequence list 142 matching the selected product-action entry. The match may be found by locating matching Product and Action tags in the vectorization file 128 (or using any other indicia in the product-action entry). The task sequence list 142 may specify multiple target systems on which multiple discrete tasks should be executed to implement the product and action specified in the selected product-action entry. In the example shown in Figure 1, the task sequence list 142 specifies the tasks for carrying out product 1, action 1, on the target systems 1 through 'k'.

For each task on each target system, the system creates a separate extended product vector. Examples of the extended product vectors are shown in Figure 1 and labeled 144, 146, 148, and 150. The extended product vectors 144, 146, and 148, for example, represent the individual extended product vectors that arise as a result of the vectorization file specifying task1, task 2, through task 'r' (142 - 146) to execute for product 1, action 1 on the target system 1. The extended product vectors may adhere to the extended product vector schema shown in the Extended Product Vector Schema Table, below, or other schemas.

The system writes the extended product vectors as individual rows in an order execution database 152. As will be described in more detail below, a polling subsystem may monitor the order execution database 152 and dispatch instructions for performing the tasks represented in the extended product vectors to specific target system. In particular, the polling subsystem may include individual pollers dedicated to each target system. However, the polling subsystem may be implemented in other ways, such as using fewer pollers than target systems and distributing the dispatching load for the target systems to specific pollers.

Examples of the schemas noted above now follow:

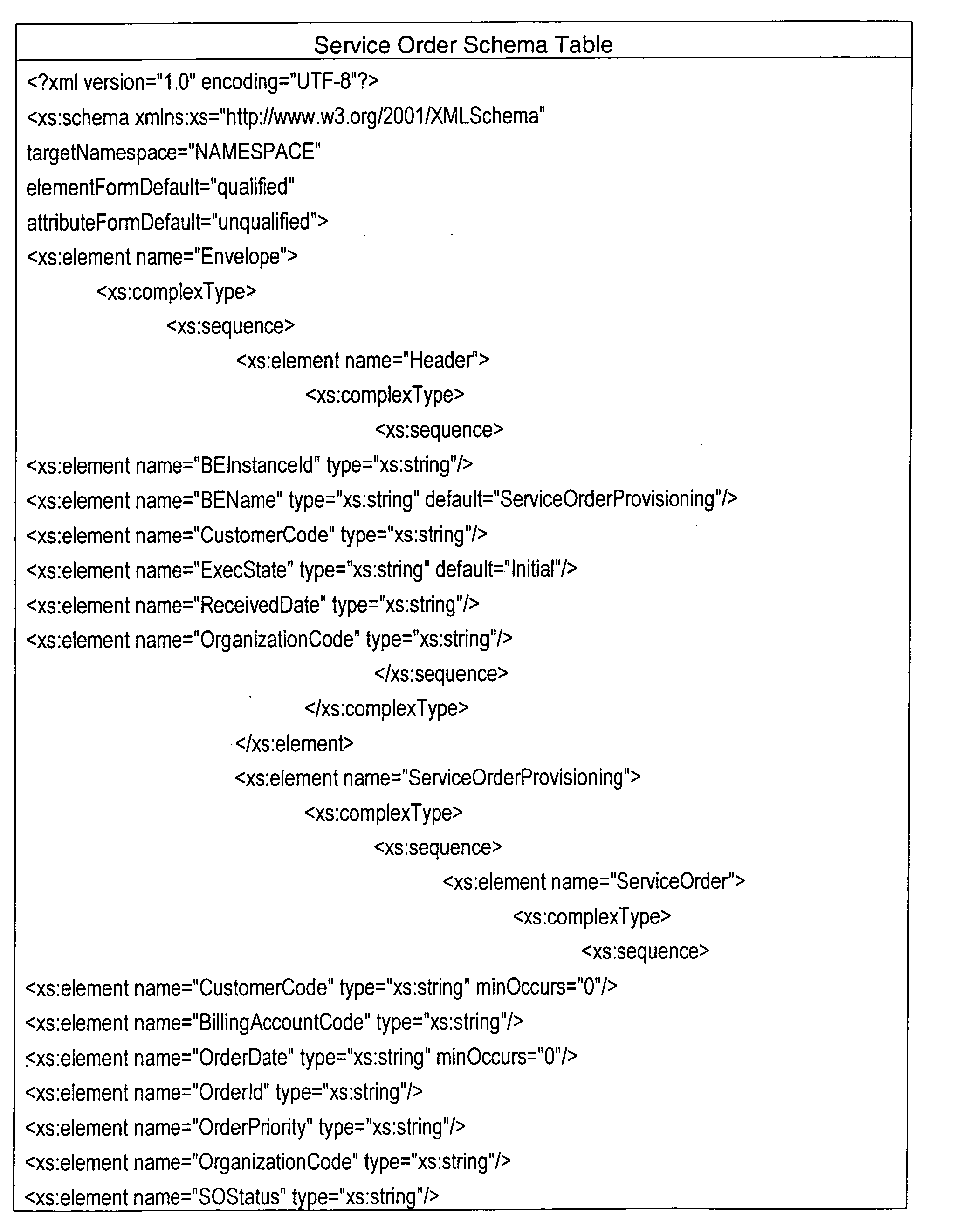

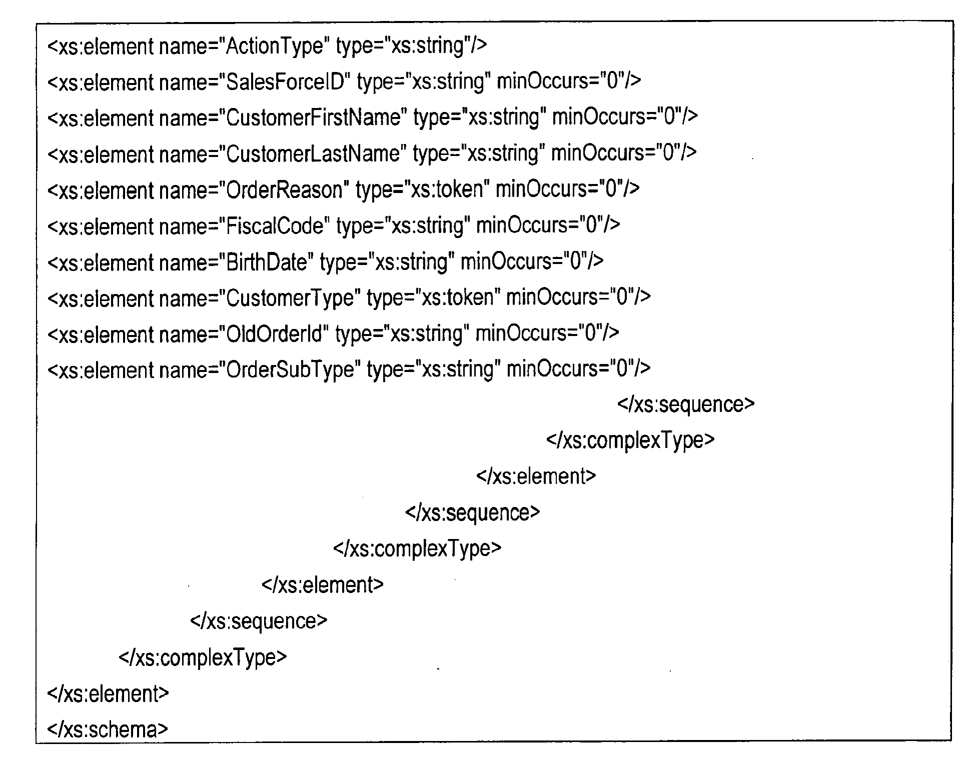

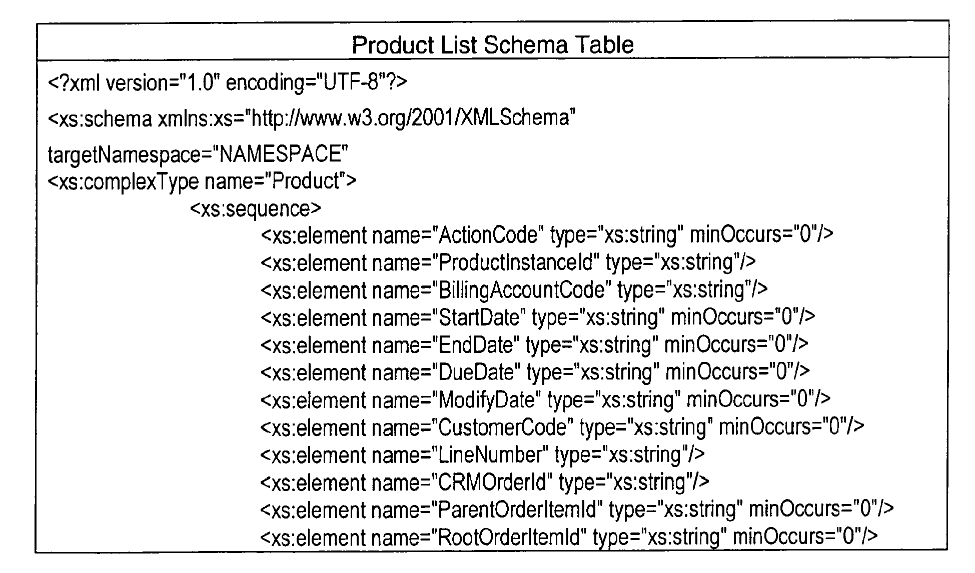

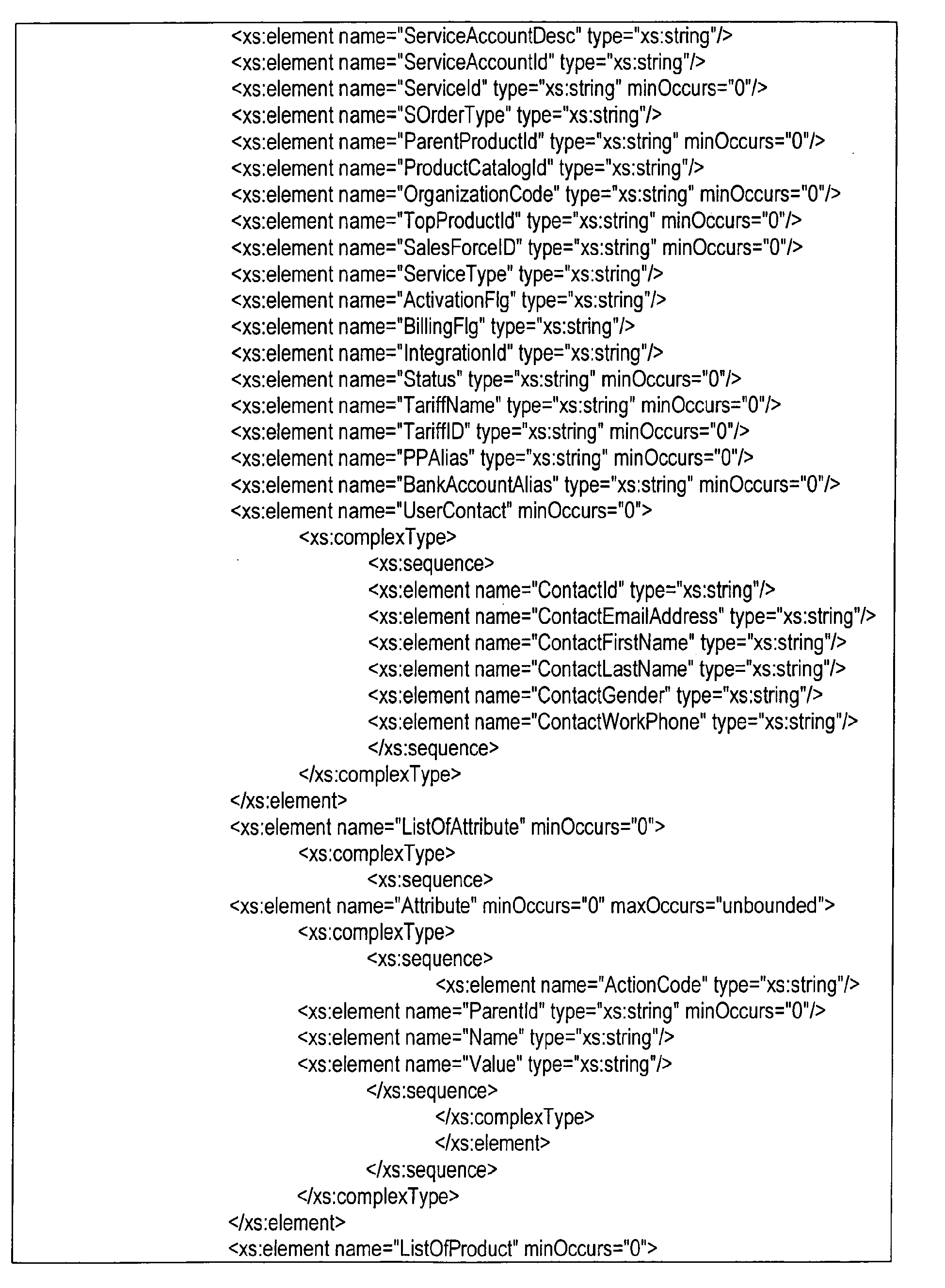

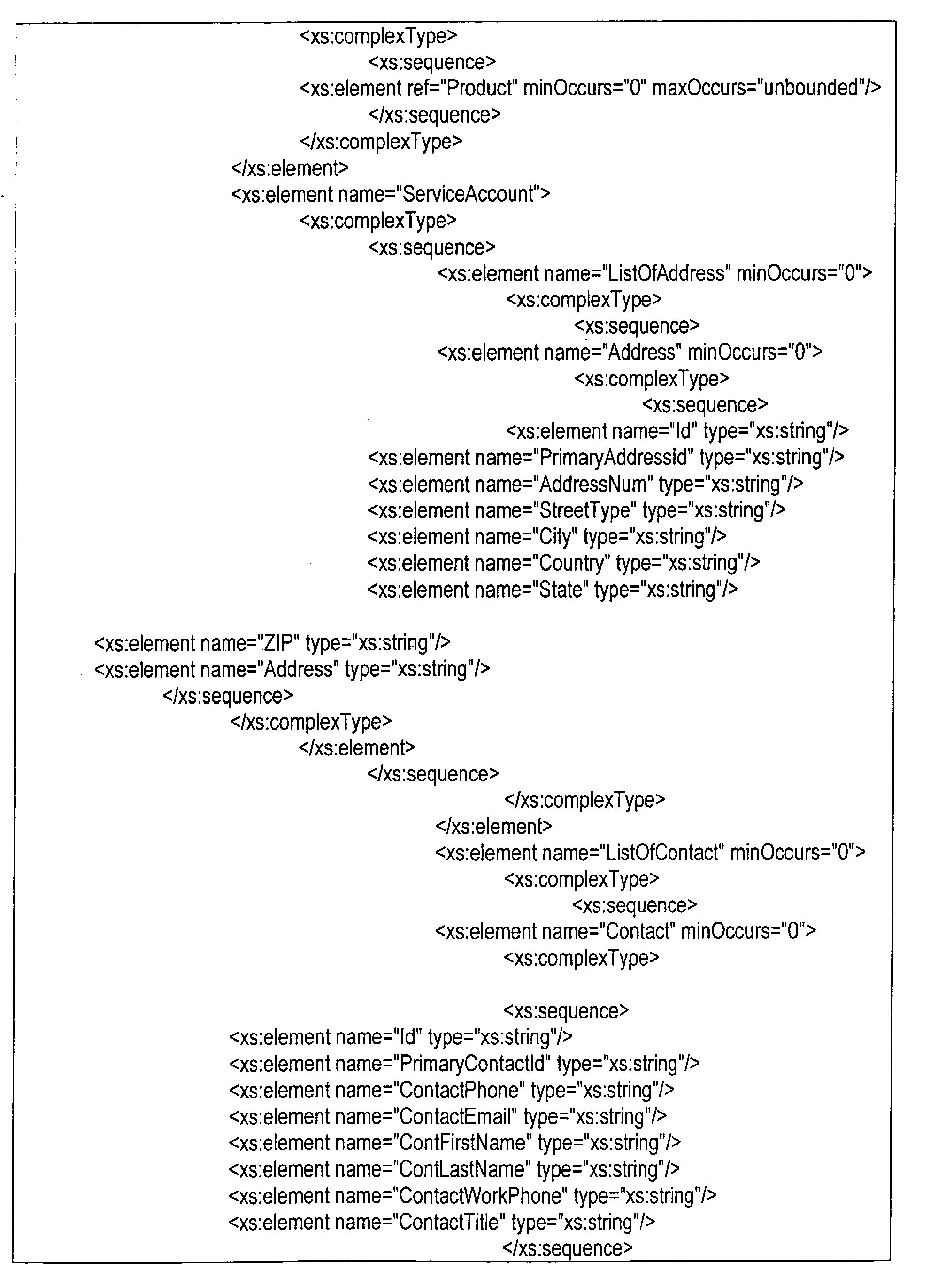

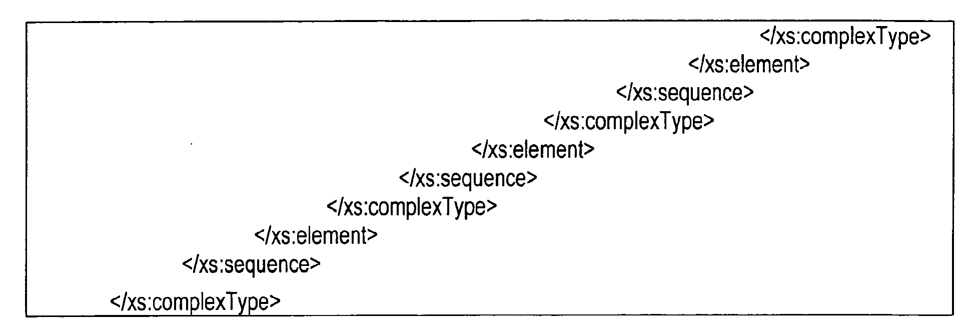

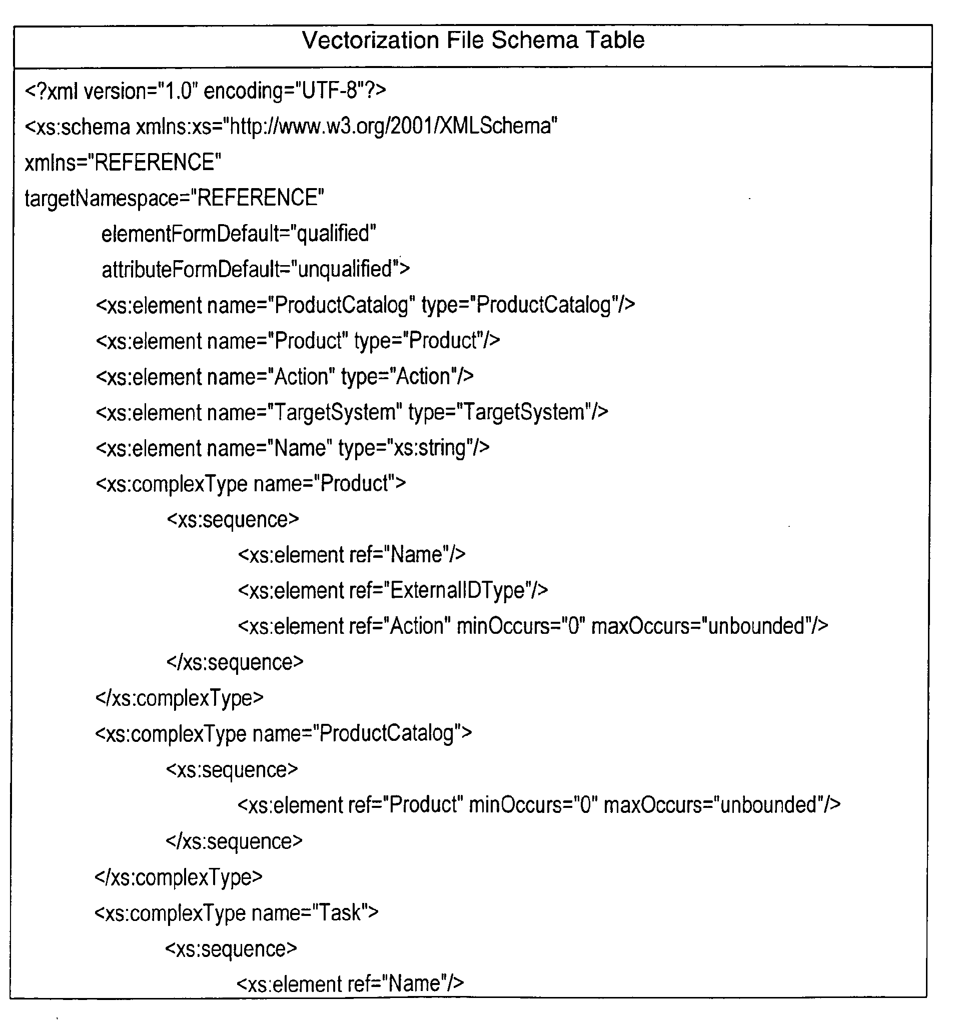

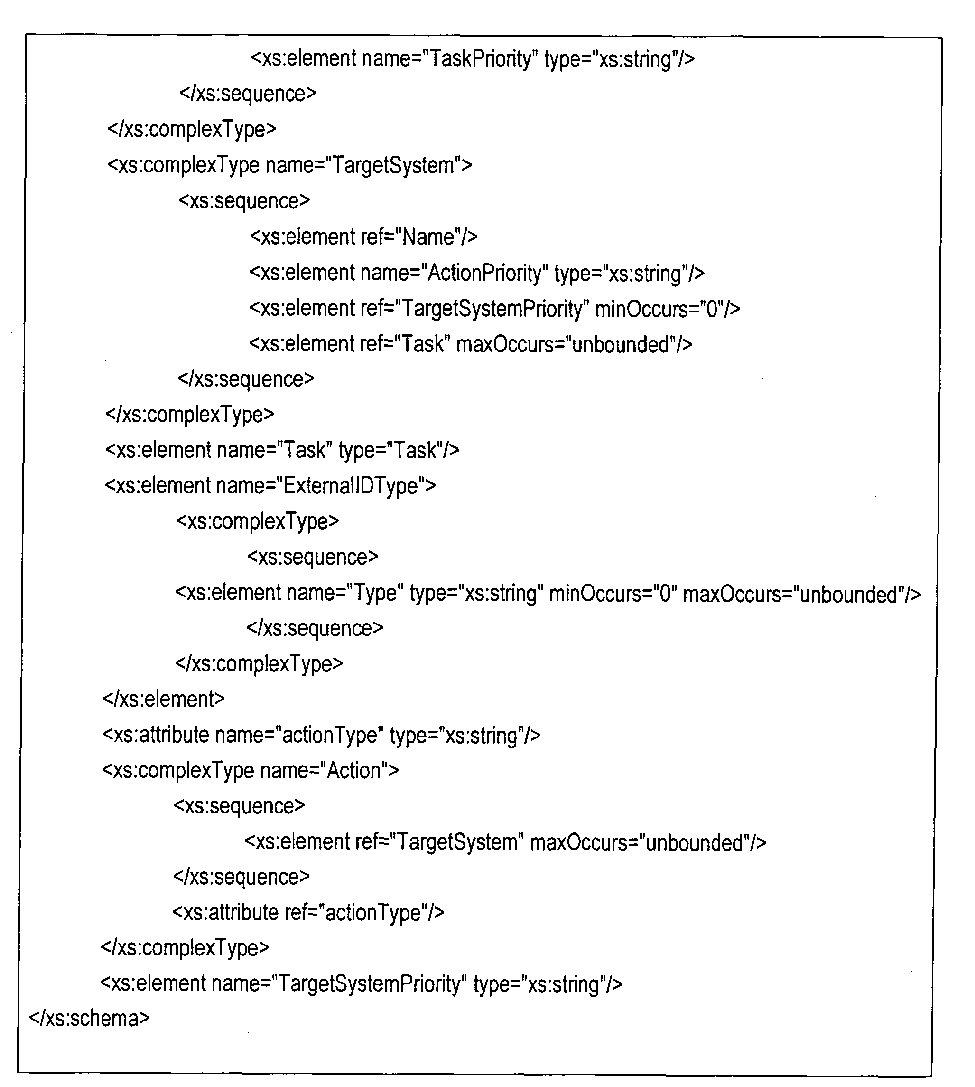

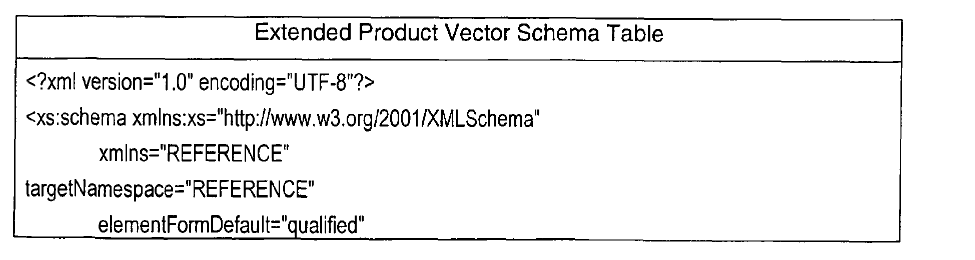

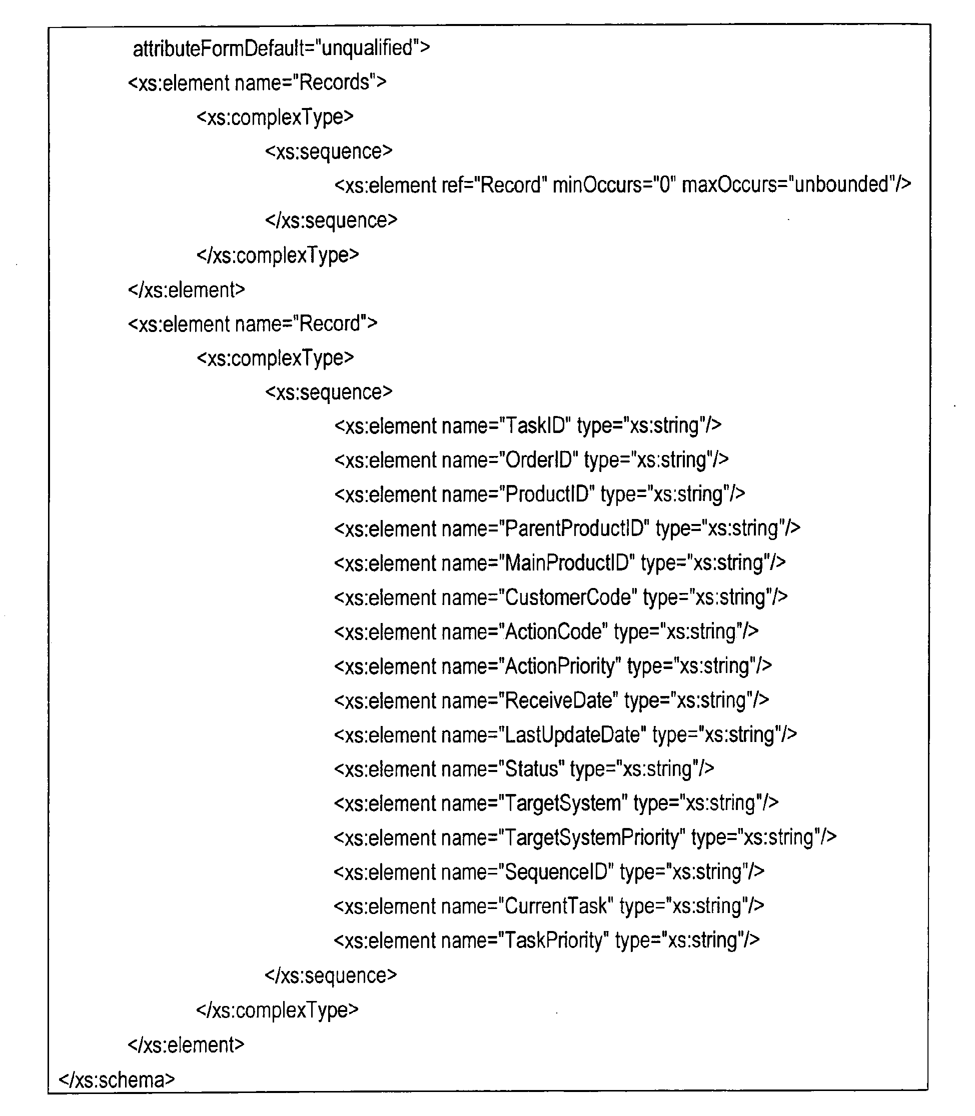

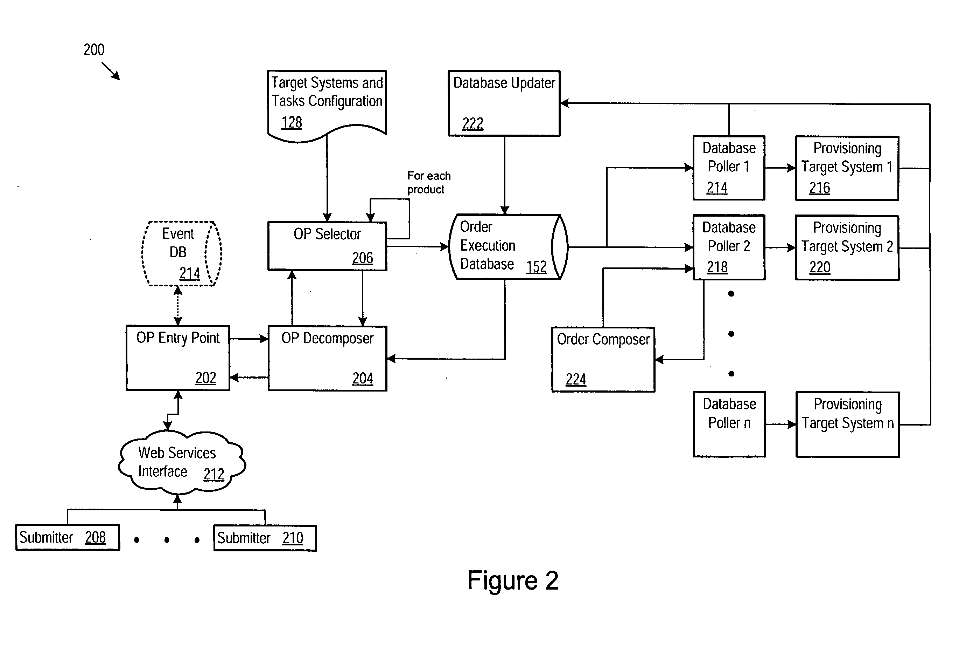

Figure 2 shows an example implementation of a dynamic order workflow template instantiator and decoupler system 200. The system 200 includes order processor (OP) entry point logic 202, OP decomposer logic 204, and an OP selector logic 206. In operation, service order (SO) submitters (e.g., the SO submitters 208 and 210) communicate service order structures 102 to the OP entry point logic 202. The SO submitters 208 and 210 may represent automated processes, processing systems, or manual submitters of service order structures 102. In one implementation, the SO submitters 208 and 210 communicate the service order structures 102 using a web services interface 212 to the OP entry point logic 202. The OP entry point logic 202 may include logic for receiving the web services request, issuing acknowledgement, storing the service order structure in an optional event database 214, and passing the service order structure to the OP decomposer logic 204. In other implementations, SO submitters send the service order structures through other communication interfaces, such as remote procedure calls, shared memory, shared files, communication sockets, or other interfaces.

The OP decomposer logic 204 flattens the hierarchical structure of any service order structure received into a non-hierarchical product list 114. One technique for flattening the hierarchical structure includes executing XPath queries to locate individual requests for certain actions on certain products, and creating an individual product-action entry for each request located. However, other file parsing, search, or data location and extraction techniques may instead be used to find the requested actions in the service order structure.

The OP decomposer 204 passes the non-hierarchical product list 114 to the OP selector logic 206. As explained in detail above, for each product-action entry in the non-hierarchical product list 114, the OP selector logic 206 determines a matching task sequence list 142 in the vectorization file 128.

The system locates in the vectorization file 128 a task sequence list 142 matching the selected product-action entry. For each task on each target system, the OP selector logic 206 creates a separate extended product vector and writes the individual extended product vector as a unique row in the Products table in the order execution database 152.

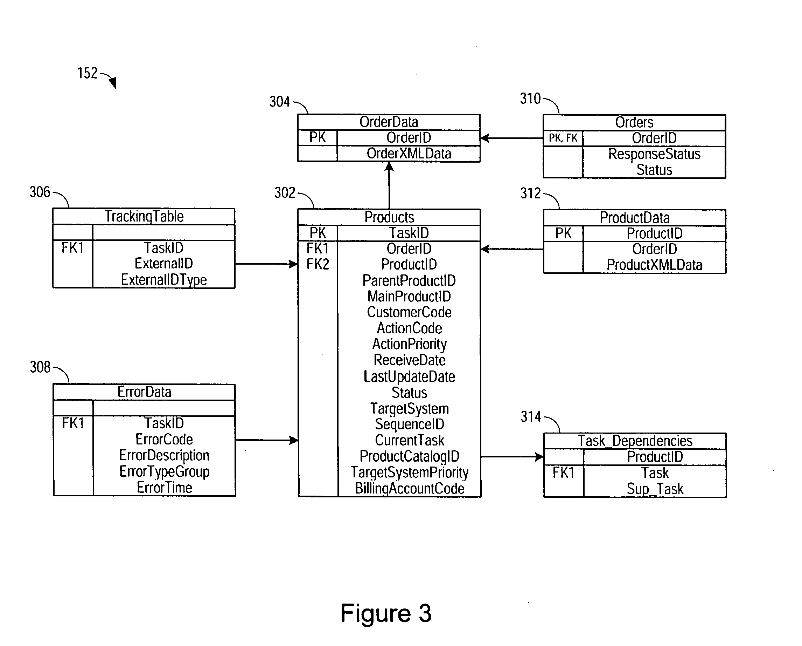

Figure 3 shows an example implementation of the order execution database 152. The order execution database 152 includes a Products table 302, an Order Data table 304, a Tracking table 306, and an Error Data table 308. The order execution database 152 further includes an Orders table 310, a Product Data table 312, and a Task Dependencies table 314. Each of the tables 302 - 314 is described in detail in the following tables.

The Products table 302 holds information about each product and may contain one row for each task on each target system per product. One row per task facilitates fulfilling a scenario in which two products have to be processed on two target systems with different priorities. One row per task further facilitates other processing scenarios, such as when product1 has to be processed on target system 1 and target system 2, but product2 has to be processed only on target system 2 only after product1 was processed there.

| **Products Table** | | | |
|---|---|---|---|
| **Column** | **Type** | **Null** | **Description** |
| TaskID | varchar2 | N | Internal unique ID used to track the task on the product |
| OrderID | varchar2 | N | Ordered of the order that product belongs to |
| ProductID | varchar2 | N | Unique product ID from source system (e.g., SO submitter) |
| ParentProductld | varchar2 | N | ID of the parent product |
| MainProductld | varchar2 | | ID of the main product in the order |
| CustomerCode | varchar2 | N | Customer code |
| ActionCode | varchar2 | N | Action for the product |
| ActionPriority | varchar2 | N | Priority of the action for given target system |
| ReceiveDate | date | | Date when product was received |
| LastUpdateDate | date | | Date when product record was updated |
| Status | varchar2 | N | Status of product |
| TargetSystem | varchar2 | N | Name of target system product should be processed on |
| TargetSystemPriority | Varchar2 | | Priority of target system |
| SequencelD | varchar2 | N | SequenceID is of Products |
| ProductLevel | varchar2 | | Level of product inside order hierarchy |
| CurrentTask | varchar2 | | Task which should be executed for product |
| BillingAccountCode | varchar2 | | Billing account associated with order |
| ProductCatalogld | Varchar2 | | Product catalogue ID of the product |

The Tracking table 306 connects any desired external identifier for a task, with a particular task identifier. Examples of external identifiers include Mobile Subscriber Integrated Services Digital Network (MSISDN) identifiers, International Mobile Subscriber ldentiity (IMSI) identifiers, and other identifiers used by the target systems or other entities for convenient reference.

| **Tracking Table** | | | |
|---|---|---|---|
| **Column** | **Type** | **Null** | **Description** |
| TaskID | varchar2 | N | Internal unique ID used to track the product |
| Externalld | varchar2 | | Identifier used by an external system or other entity to refer to the task identified by the TaskID |
| ExternalldType | varchar2 | | Identifier type for the ExternallD (e.g., MSISDN). |

The Product Data table 312 holds XML messages with product information extracted from the service order structure matching to the particular product and action linked to the ProductlD.

| **Product Data Table** | | | |
|---|---|---|---|
| **Column** | **Type** | **Null** | **Description** |
| ProductID | varchar2 | N | Product unique ID used to track the product |
| ProductXMLData | varchar2 | N | XML message of the product |

The Order Data table 304 will hold XML message with order information.

| **Order Data Table** | | | |
|---|---|---|---|
| **Column** | **Type** | **Null** | **Description** |
| OrderID | varchar2 | N | Internal unique ID used to track the product |
| OrderXMLData | varchar2 | N | XML message of the order |

The Error Data table 308 holds error codes and descriptions for errors that occur during processing.

| **Error Data Table** | | | |
|---|---|---|---|
| **Column** | **Type** | **Null** | **Description** |
| TaskID | varchar2 | N | Internal unique ID used to track the product |
| ErrorCode | varchar2 | | error code (e.g., an error number or other identifier returned from a target system) |
| ErrorDescription | varchar2 | | error description (e.g., a plaintext error message returned from a target system) |
| ErrorTypeGroup | varchar2 | | ErrorTypeGroup describes a category of error. Examples include 'Application', 'Connection', 'AutoReprocess', 'Operator Attention', and other group categories. |
| ErrorTime | date | | Time at which error occurred |

The Task Dependencies table 314 defines dependency relationships between tasks. As will be seen in the Poller search queries below, the task dependency relationships help to ensure that superior tasks are completed before subordinate tasks, thereby preventing attempts at out of order task execution, and the errors that would result.

| **Task Dependencies Table** | | | |
|---|---|---|---|
| **Column** | **Type** | **Null** | **Description** |
| Task | varchar2 | N | Id of the task |
| Sup_Task | varchar2 | | Taskld of the task that current task depends on (i.e., the superior task) |

The Orders table 310 holds status information for the order, including the status of the order processing, and the response status sent to supporting processing systems. ResponseStatus: This field stores the status of a feedback response for an uplink system, such as a CRM system. The status may be, for example, a '1' to indicate that a feedback response has been sent, and a '0' to indicate that a feedback response has not yet been sent. A feedback response may be scheduled for transmission to the uplink system when the Status changes. Status: This field describes the current status of the order. Examples of order status include Completed, Open, Pending, Partially Completed, and Failed. For example, if all products are provisioned successfully, the Status may be Completed. If less than a first preset threshold number (e.g., 2) of products have failed provisioning, then the Status be Partially Completed. If more than a second preset threshold number of products have failed provisioning, or the parent product has failed provisioning, then the Status may be Failed.

| **Orders Table** | | | |
|---|---|---|---|
| **Column** | **Type** | **Null** | **Description** |
| Orderld | varchar2 | N | Id of the order |
| ResponseStatus | varchar2 | | Response message that will be sent to CRM |
| Status | varchar2 | | Describes current status of the order(new, processing, failed, complete) |

One example of a product-action entry in the non-hierarchical product list 114 is shown below in the Example Product Entry Table. In the example, an Add action is specified on a particular Product, and the related information is given, such as customer information, account information, tariff IDs, status, parent and root order items, and other information.

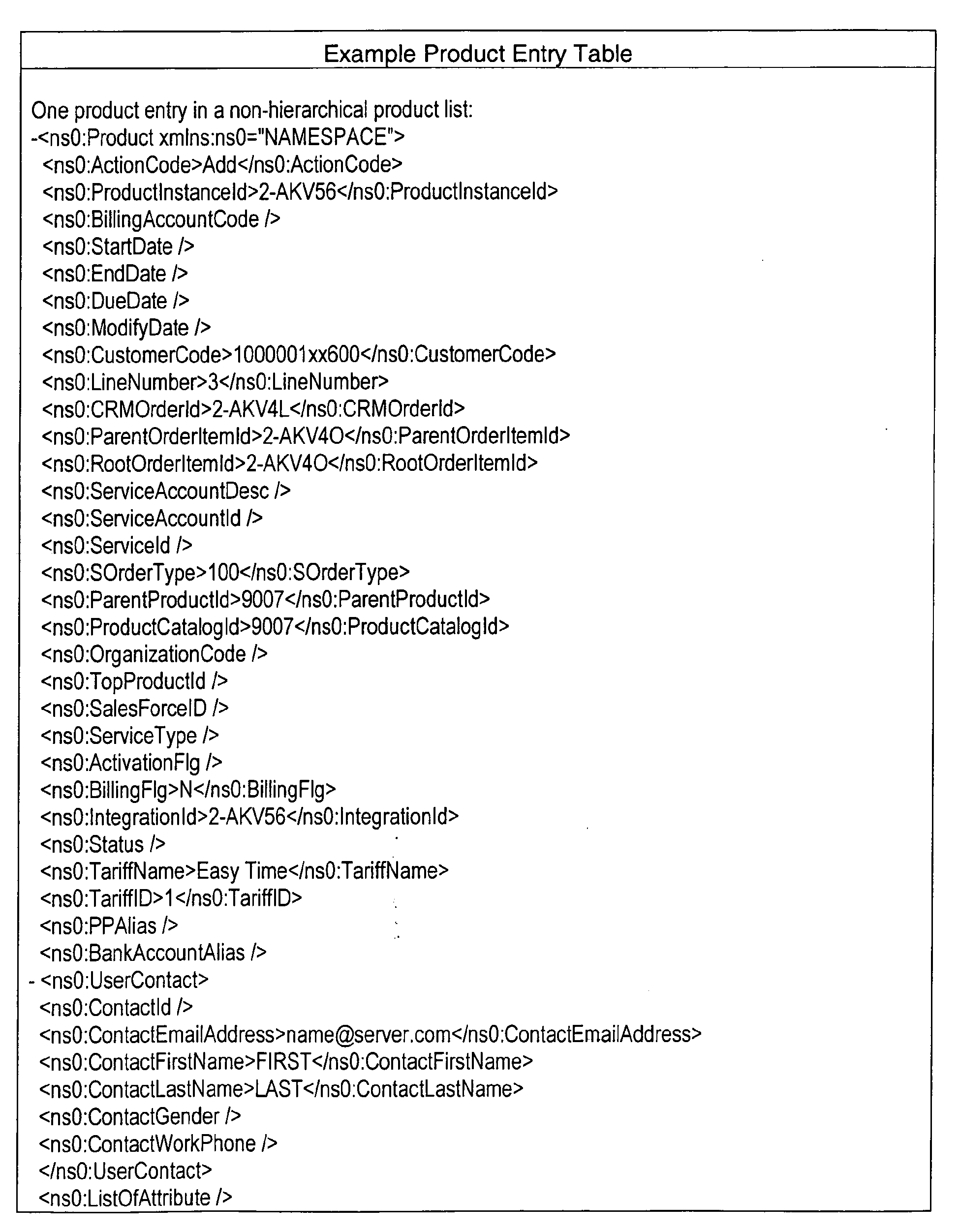

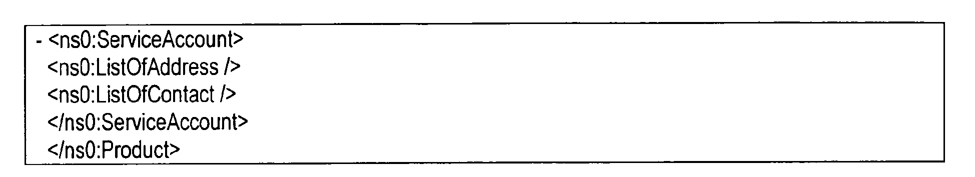

One example of an entry in the vectorization file 128 is shown below in the Example Vectorization File Entry Table. In the example, the vectorization file defines an Add, Update, Suspend, and Delete action for product 9007. The table also shows the specific structure of the Add Action. In the table, a task sequence list for the Add Action is shown, including the two <TargetSystem> tags, each one including an action priority, target system priority, and <Task>. In other words, the task sequence list for the Add Action includes tasks on two different target systems. Any action on any system may include multiple tasks on multiple systems captured in a task sequence list.

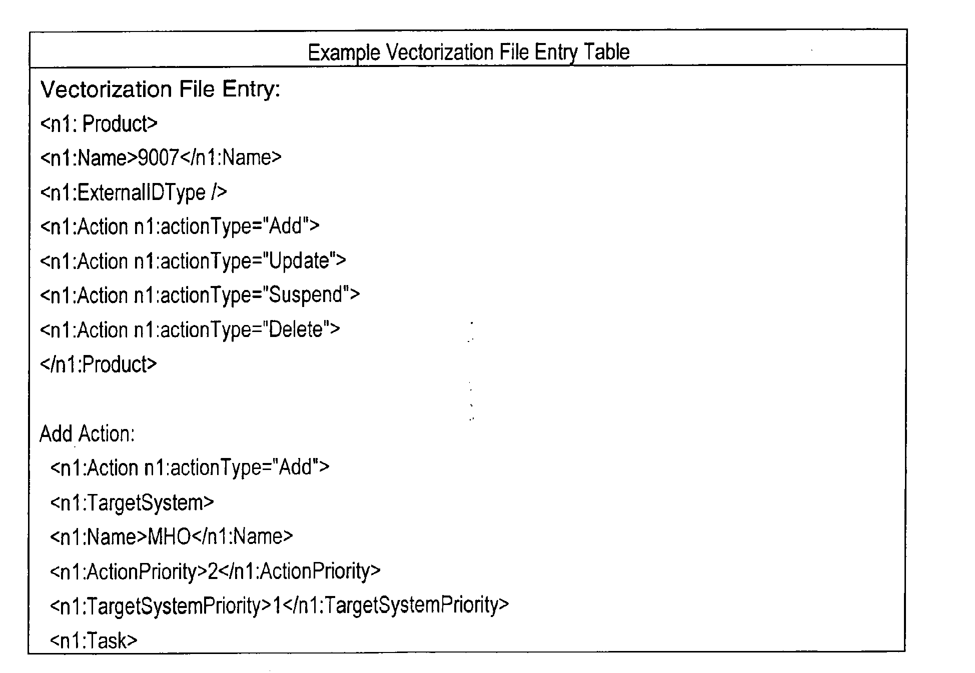

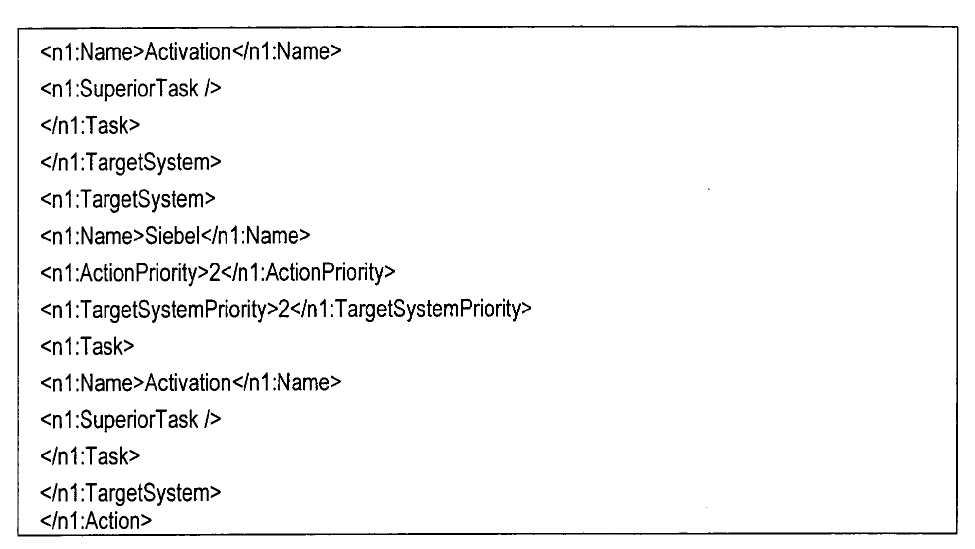

One example of an extended product vector is shown below in the Example Extended Product Vector Table. The components of the vector correspond to the Product table fields, as each extended product vector is written on a per-row basis into the Product table in the service execution database 152. In this example, the extended product vector defines an Activation task requiring an Add action on the MHO target system, with task priority 1, target system priority 1, and action priority 1.

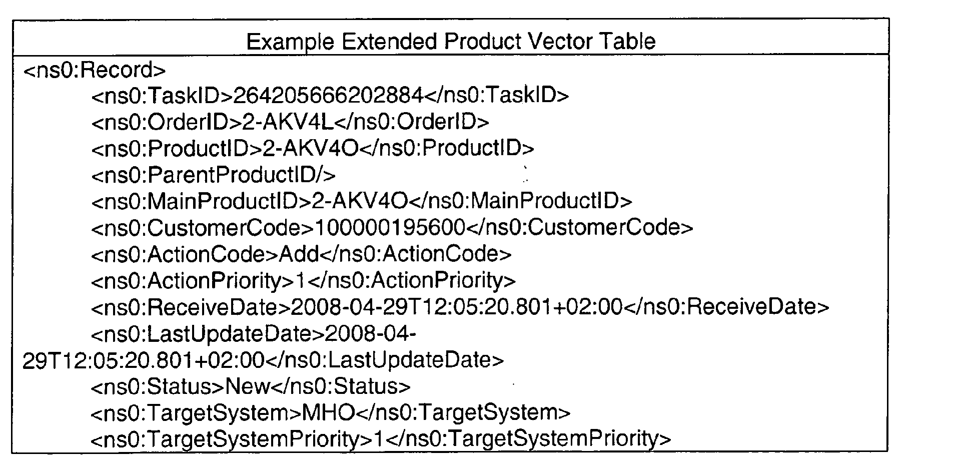

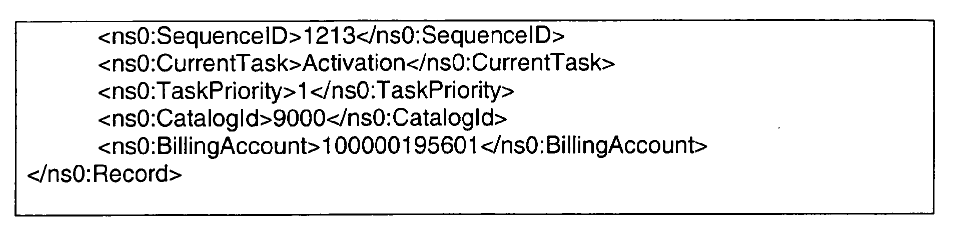

The order execution database 152 provides a basis for specific database views useful to individual target systems. The pollers on the target systems may use the views to ascertain the details underlying each task slated for execution on the target system. For example, the poller on each target system may construct a view that shows the products that should be processed on the target system. The target system poller may access the view and take a configured number of products for processing during each retrieval pass. The rows in the view may be sorted by priority of the task and action as well as date. One beneficial result is that the product that arrived first is also processed as first. However, other priority orders may be enforced.

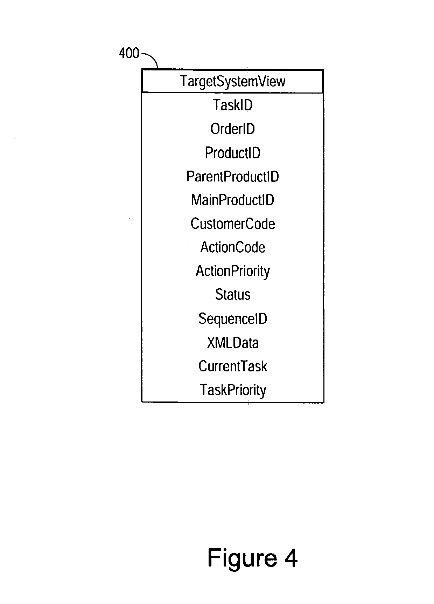

Figure 4 shows an example View Table 400 defining a target system view. The entries in the view are obtained from the tables in the order execution database 152 and are described above.

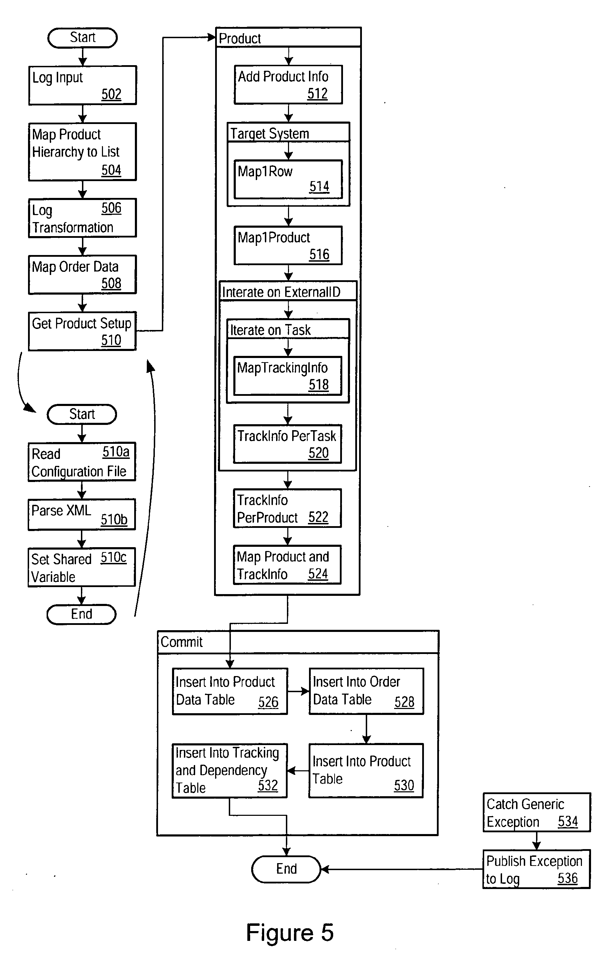

Figure 5 shows a flow diagram 500 of logic that the dynamic order workflow template instantiator and decoupler system 200 may implement in hardware, software, or both, to decompose complex hierarchical service order structures. Initially, the OP entry point logic 202 receives a service order structure and may locally transform the service order structure to adhere to any desired schema (e.g., for a common data model as shown in Figure 11) for further processing. The system then logs the incoming service order structure (502).

As examples, the following data may be logged into a logging database: Timestamp, System: the system which the service order is related to (may be optional when no other system is involved and the service order results from an internal process), BusinessEvent: the business which this log entry is related to, for example 'CreateCustomer' (may be optional if no BusinessEvent triggered the service order, ProcessName: the name of the process that generated the log entry, TaskName: the current operation of the process (Input, Output, Call to Support system, Exception), Message: an error or information related to the log entry, iD: a special ID to track the sequence which is not the CustomerCode or the OrderID, CustomerCode: the CustomerCode currently processed, Orderld: the Orderld of currently processed order, Severity, and XMLContent: the XML of the service order stored as string content in the log entry.

The OP decomposer logic 204 flattens the hierarchical structure in the service order structure 102 to generate the non-hierarchical product list 114 (504). The system 200 logs the transformation to the non-hierarchical product list 114 (506). The data that is logged may include any combination of the data noted above with regard to (502). The OP decomposer logic 204 also stores the original service order structure data in the Order Data table 304, thereby maintaining a record of the original service order structure (508).

The OP selector logic 206 reads the vectorization file 128 to prepare for creating the extended product vectors (510). To that end, the OP selector logic 206 reads the vectorization file 128 (510a), for example from an external file as an XML string. The OP selector logic 206 then parses the XML string into an XML schema tree based on the pre-defined vectorization file schema (510b). The OP selector logic 206 may also set shared variables (or other parameters) to reflect the contents of the parsed XML string (510c). The shared variables may provide an interprocess communication mechanism. One process loads the configuration data into the variables so that the configuration is cached in memory. The OP selector 206 may use the shared variables to access the configuration data. When the configuration file is updated, the file may be re-loaded into the shared global variable. The shared global variable may hold the XML structure read from the vectorization file 128.

The OP selector logic 206 determines the target systems, actions, and priorities applicable to implementing any product and action in the non-hierarchical product list 114 (512). The OP selector logic 206 then creates a list of target systems and the specified tasks on the target systems for each product and action (e.g., Add, Suspend, Modify, NoAction) in the service order structure 102 and non-hierarchical product list 114 (514). In one implementation, the OP selector logic produces a list bounded by the <TargetSystemList> tag. Inside the list are individual <TargetSystem> entries (including target system name, action priority, and target system priority), and within each target system, a list of tasks to perform (including a task name, superior task (if any), and task priority). To that end, the OP selector logic 206 may extract portions of the vectorization file 128 that match a particular product and action specified in the entries in the non-hierarchical product list 114 and add the extracted portions to the target system list.

The OP selector logic 206 also creates the extended product vectors (516). The extended product vectors individually specify each task on each target system for implementing a specific product and action. Each extended product vector may include the fields shown in the Products table 302 and the Example Extended Product Vector Table, including, as examples, a TaskID, OrderID, ProductID, Action code, Action priority, target system name, target system priority, task priority, and current task ID.

The OP selector logic 206 also accumulates External IDs (MSISDN numbers) and External ID Types (e.g., MSISDN) into structures (518) with an associated TaskID assigned by the OP selector logic 206. An Externalld may be any identifier of the product or task that is different from the data the system 200 generates for the columns in the Products table 302. The system 200 uses the External IDs for tracking. As a result, the system 200 may search for a specific product or task or order by the External ID. The ExternalldType identifies what the External ID is. For example, when External ID is a telephone number, the ExternallDType may be "MSISDN". The vectorization file 128 holds the External ID and External ID Type. The system 200 reads the vectorization file 128 and extracts the corresponding data from the service order structure 102. The OP selector logic 206 creates a temporary data structure in memory to hold the TaskID, External ID, External ID Type mappings for the current task. Because the OP selector logic 206 maps External IDs for each task, the OP selector logic 206 stores the mappings from prior iterations and accumulates new mappings as the process continues (520). The Accumulated Mapping Table, below, shows an example of two TaskID, ExternallD, ExternallDType mappings that the OP selector logic 206 generates.

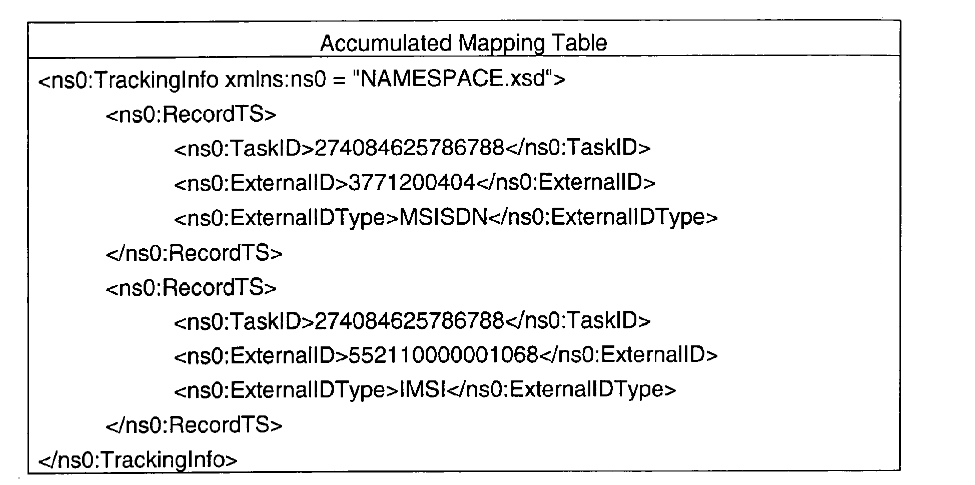

The OP selector logic 206 may also transform the accumulated <Trackinglnfo> records into a consolidated list bounded by a single <TrackingInfo> tag, within which multiple <RecordTS> tags store the accumulated mappings (522). An example is shown below in the Consolidated Mapping Table.

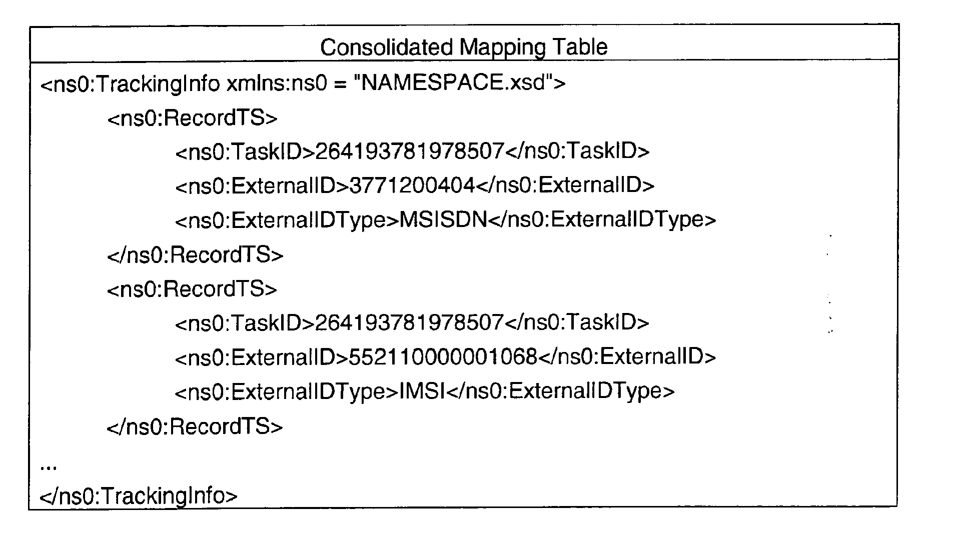

The OP selector logic 206 may further accumulate data to store as rows in the order execution database 152, repeating over each product (524). Once the data has been accumulated for each product, the OP selector logic 206 writes the data as rows in the order execution database 152. The OP selector logic 206 may write the product data into the Product Data table 312 (526) and write the order data into the Order Data table 304 (528).

In addition, the OP selector logic 206 writes each extended product vector as a row into the Products table 302 (530). The OP selector logic 206 also writes tracking vectors as individual rows in the Tracking table 306 (532), and writes dependency vectors as individual rows in the Task Dependency table 314 (532). Examples of the tracking vectors and dependency vectors are shown in the Tracking and Dependency Table below.

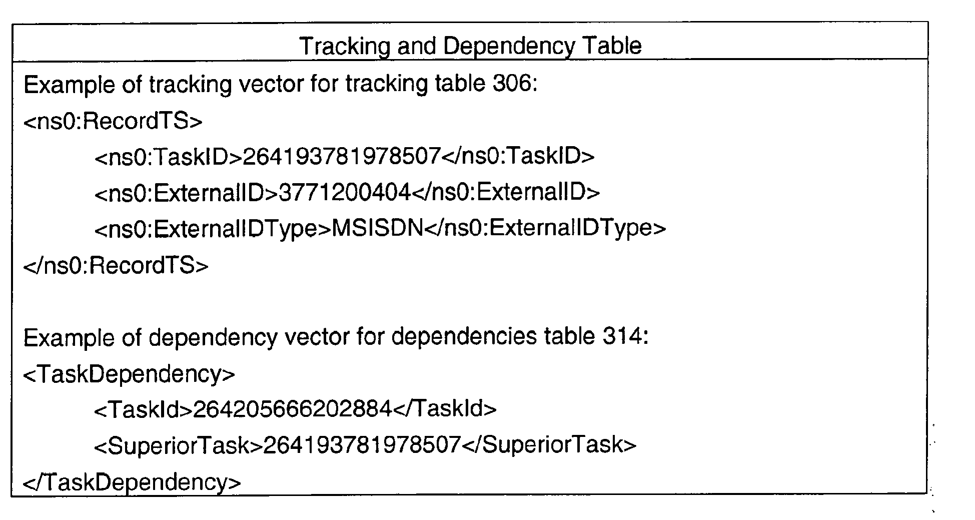

After successfully processing a service order structure 102, the system 102 may return a success message to the OP submitter through the web service or other interface to the OP submitter. When exceptions happen, the system 200 may catch the exceptions (534), publish them to an exception log (536), and send an error message back to the OP submitter.

Returning to Figure 2, the system 200 also includes pollers that check the order execution database 152 for new tasks for specific products and awaiting execution on specific target systems. In the example shown in Figure 2, the first database poller 214 watches the order execution database 152 for tasks to be submitted to the first provisioning system 216 for execution. Similarly, the second database poller 218 watches the order execution database 152 for tasks to submit to the second provisioning system 220 for execution. There may be any number of database pollers and target systems. Furthermore, a single poller may serve a single or multiple target systems, or multiple pollers may serve a single or multiple target systems.

The target systems, pollers, and other entities may provide feedback on task execution to the database updater 222. In turn, the database updater 222 writes status information back into the order execution database 152. The system 200 may use the status information for monitoring and review purposes to review, verify, and account for execution of tasks at any stage of their execution.

The system 200 may also include order composer logic 224 operating in cooperation with any particular database poller. The optional order composer logic 224 may accept multiple extended product vectors retrieved from the order execution database 152 and reconstruct a hierarchical product or task list from the multiple extended product vectors. One benefit is that a target system that can more efficiently handle a set of tasks submitted as a hierarchical task set can obtain such a hierarchical task set from the order composer logic 224, instead of processing each task individually. However, even without the order composer logic 224, a target system may execute the tasks on an individual basis.

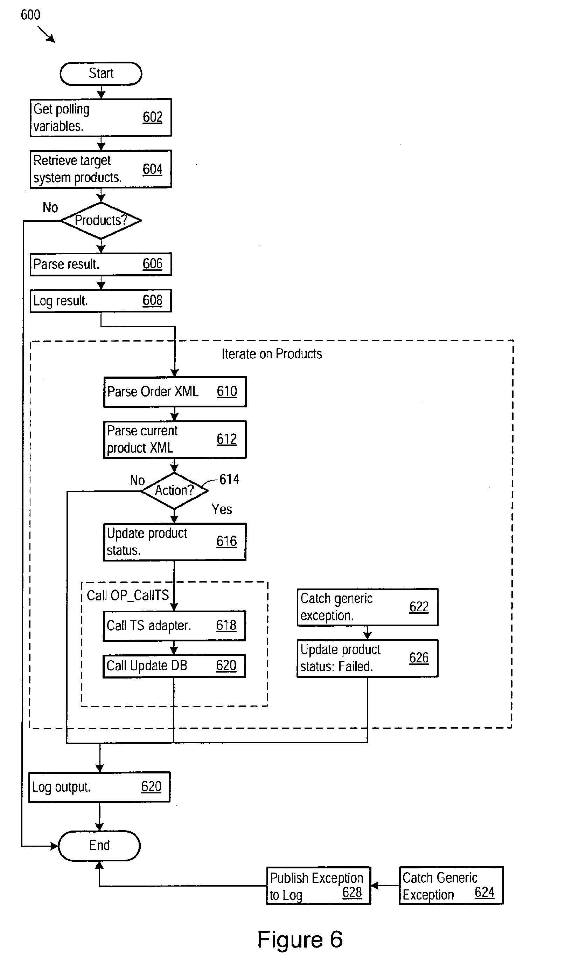

Figure 6 shows a flow diagram 600 for poller logic, for example the database pollers 214 and 218, that monitors a service order database and submits tasks execution requests to target systems. The database poller starts execution and the system 200 may initialize one or more timers for the pollers. The timers may specify the execution times for the pollers at any desired interval to poll the service order database 152 for tasks to execution on the target systems.

The database poller obtains polling variables (602). The polling variables may include PollSize, the number of rows extracted from the service order database 152 at a time. There may be other polling variables set as well, and the polling variables may be stored in and read from an external XML file. The database poller also retrieves products for the target system from the service order database 152 (604). In one implementation, the database poller executes a Java Database Connectivity (JDBC) call to obtain the rows that define tasks for the target system, and uses a database view created over the service order database 152 specific to the target system.

The Target System View Creation Table, below, shows an example of view creation logic that a database poller may execute to construct the database view (see Figure 4) for a target system. Each poller may vary the manner in which the view is created for any particular target system. In the example shown in the Table, the view is created for a target system named 'VAS', but any other target system may be specified by adapting the view selection logic to specify a different target system name and any other desired changes to the selection criteria or priority handling for that particular target system. The view creation logic specifies 'New' tasks for the 'VAS' system, and exercises careful control over priority and error handling.

In particular, at the point marked /* TARGETSYSTEMPRIORITY */, the view creation logic ensures that the view includes the lowest number for target system priority (i.e., the highest priority) until all tasks for the current product are completed. The view creation logic also ensures that when the status of the product is "New", "Processing" or "Loaded" that no other higher priority task has a 'Failed' status. When product tasks with higher target system priority (lower number) are completed, then product tasks with lower target system priority (higher number) are taken.

Furthermore, at the point marked /* ACTIONPRIORITY */, the view creation logic ensures that the view takes the lowest number for action priority of products for the current order. When the status of the product is "New", "Processing" or "Loaded", the view creation logic also checks (at the end of the logic) to make sure that there are no tasks for the current order ID that "Failed". When the product tasks with higher action priority (lower number) are completed, then product tasks with lower action priority (higher number) are taken.

Additionally, at the point marked /* TASKID */, the view creation logic ensures that the view takes the TaskID of the product which is included in the Task Dependencies table, and ensures at the same time that all the superior tasks (dependencies) are completed. When there is no dependency defined in the Task Dependencies table for the current task ID, the view creation logic proceeds free of managing that superior tasks are executed first.

At the location marked /* ACTIONCODE */, the view creation logic ensures that tasks with ActionCode='Add' are always taken without further checks. If ActionCode is different than 'Add', then the view creation logic checks, based on a billing account code (in order to ensure correlation of orders for one billing account), whether the product with ActionCode='Add' is completed or whether the product is not present in products table (e.g., product was completed and deleted from table). In this case any other action can be done for current billing account code.

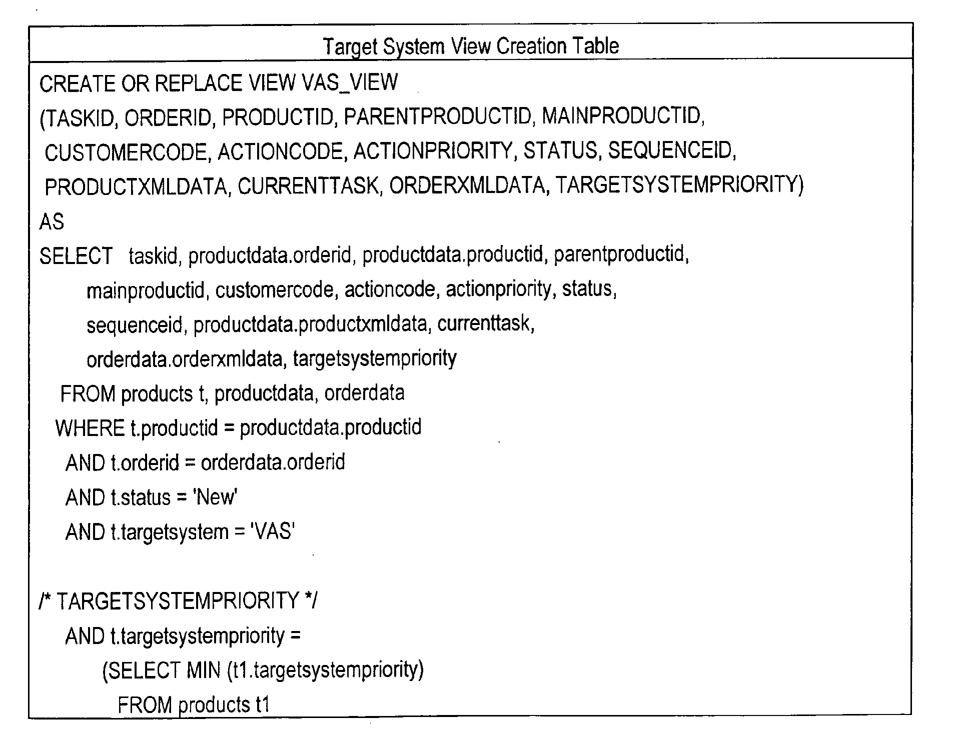

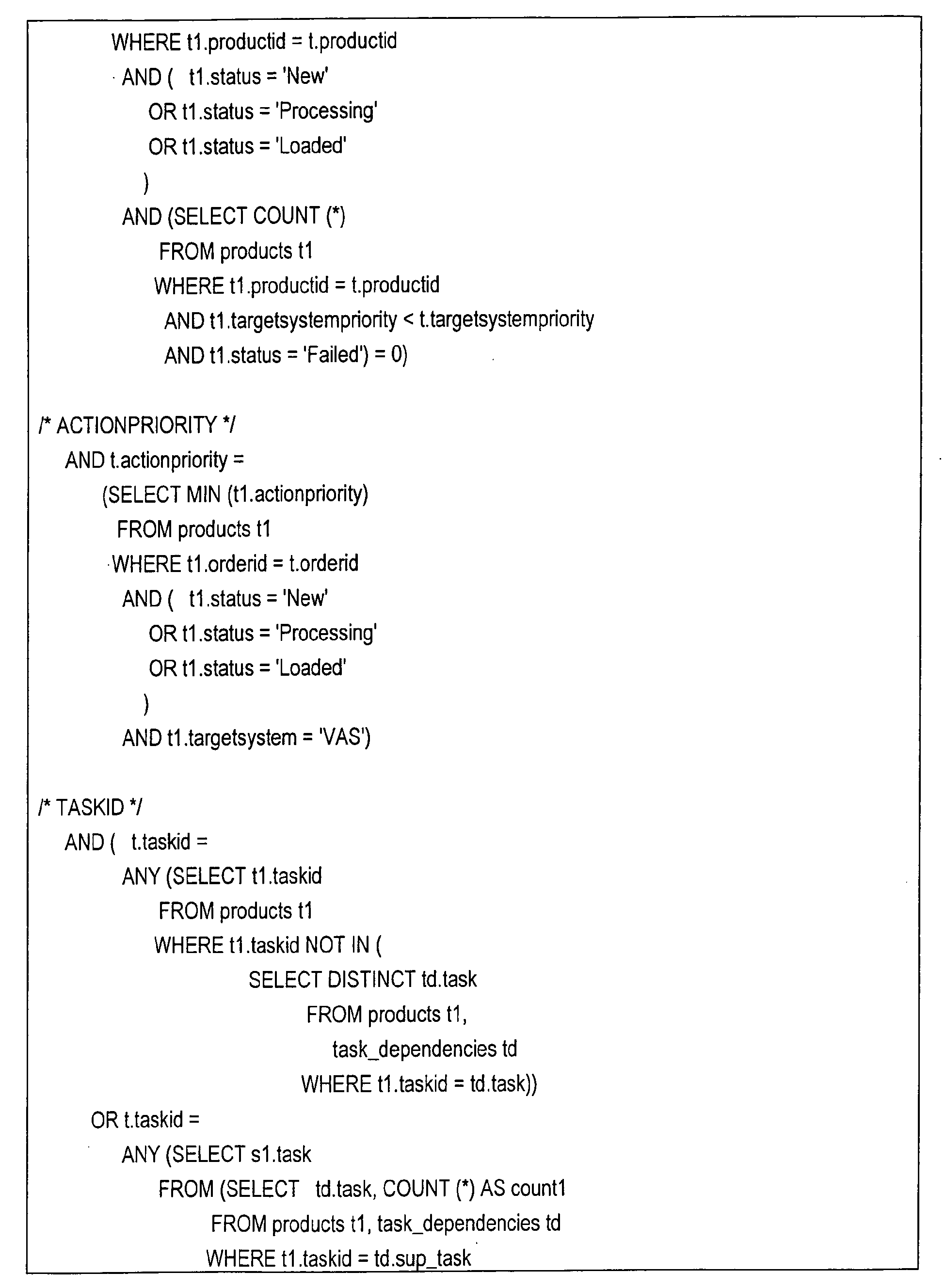

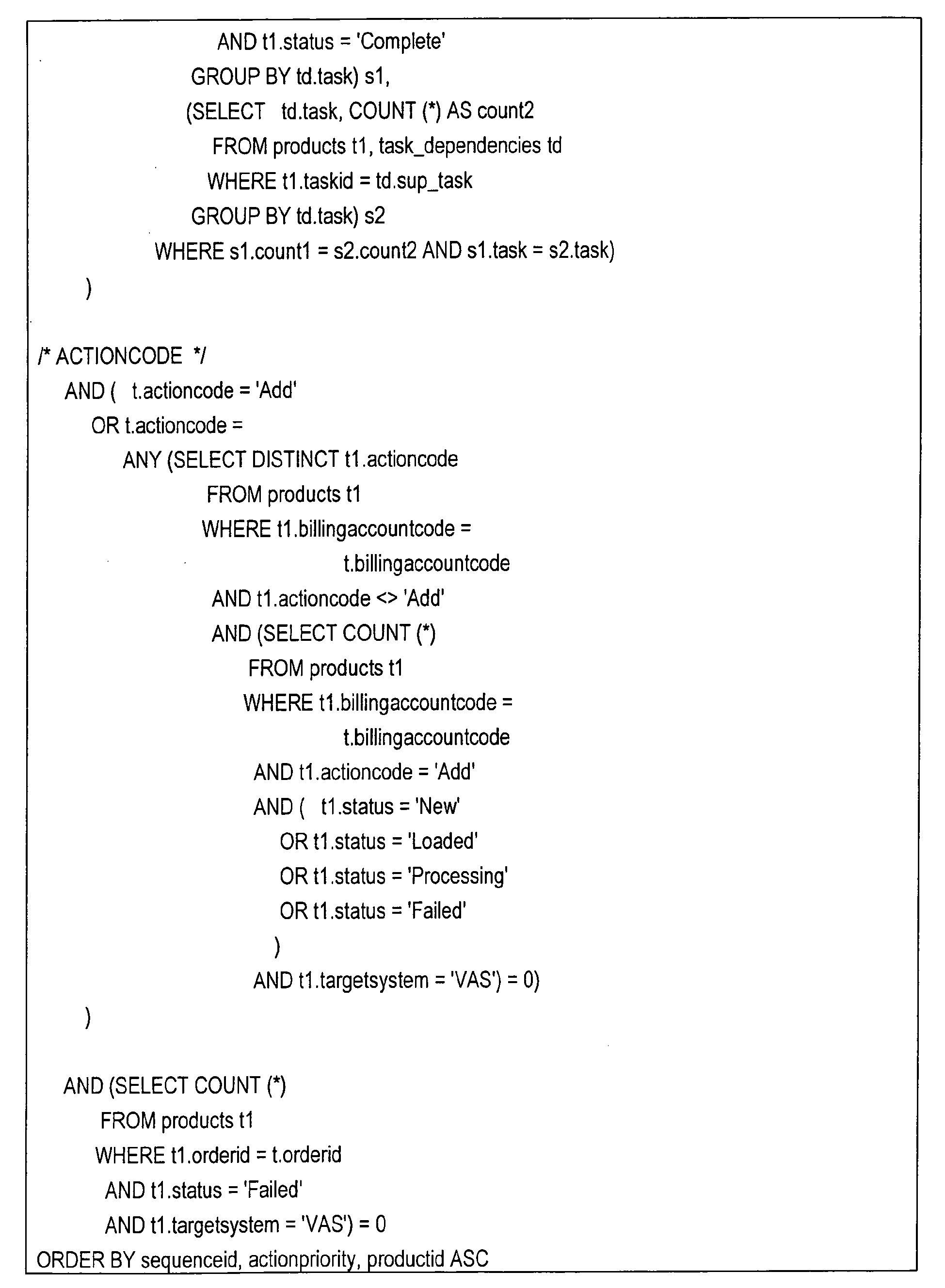

The view creation logic displays the products from the Products table 302 that can be processed and that are targeted to the 'VAS' target system. The view creation logic respects the priority criteria of processing each product and task. To that end, the view creation logic analyzes the SequenceID, ActionPriority, TragetSystemPriority, ActionCode, and/or TaskID (for task dependencies). Accordingly, the view selection logic helps ensure that one product or task is not processed out of turn before a prior product or task is not 'Complete'.

The database poller parses the view output string generated by the procedure that creates the database view (606). The Target System View Schema Table shows a suitable example target system view schema for validating the result of the view creation logic. Validation errors may be logged for inspection and correction.

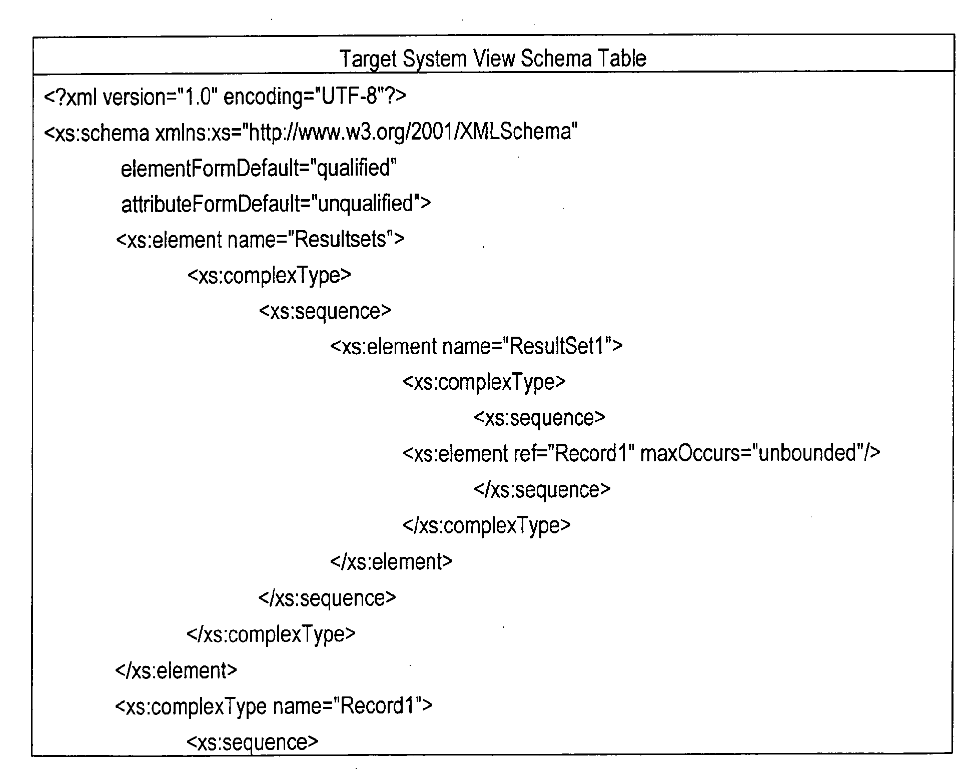

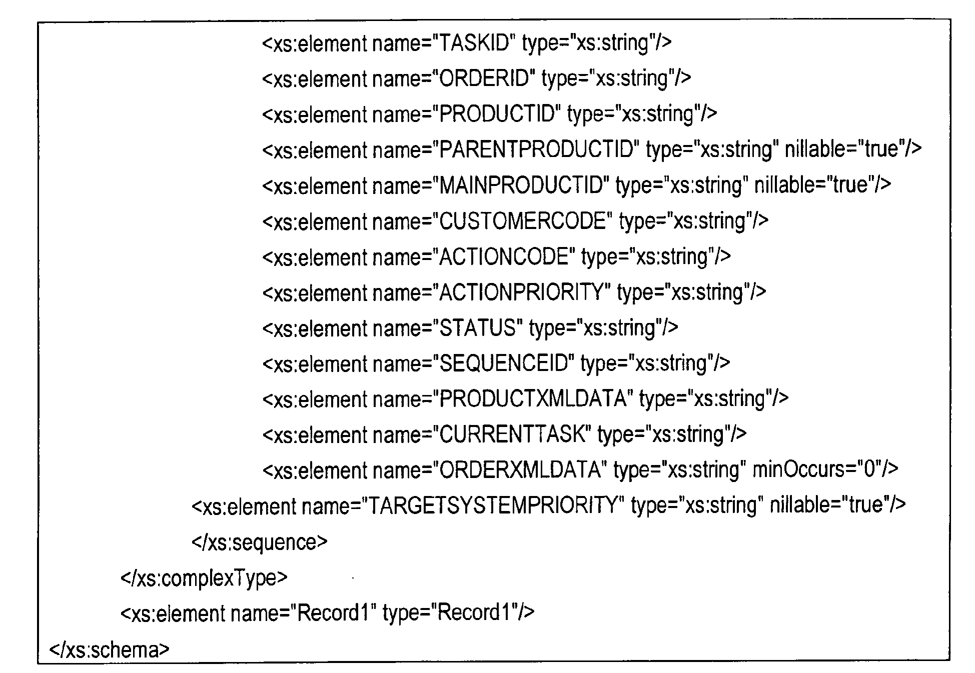

The database poller logs the view output string (608). The database poller then iterates on the products it has retrieved from the service order database 152. The database poller parses each order data string against a service order schema, such as that shown below in the Service Order Schema Table (610). Validation errors may be logged for inspection and correction.

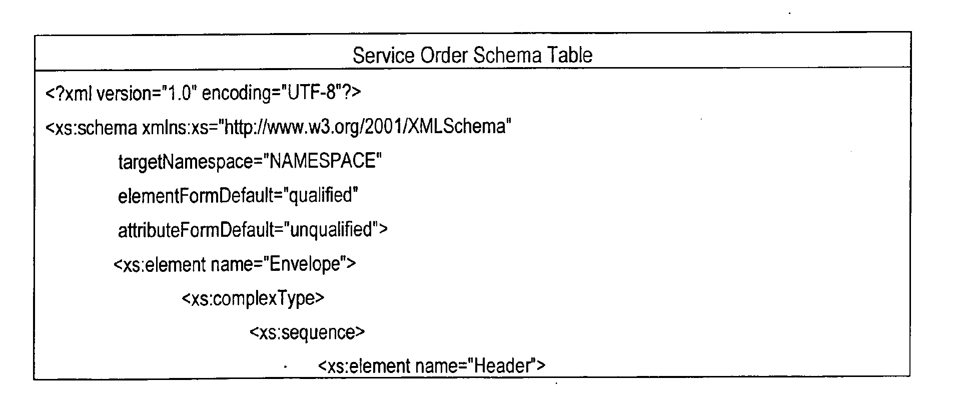

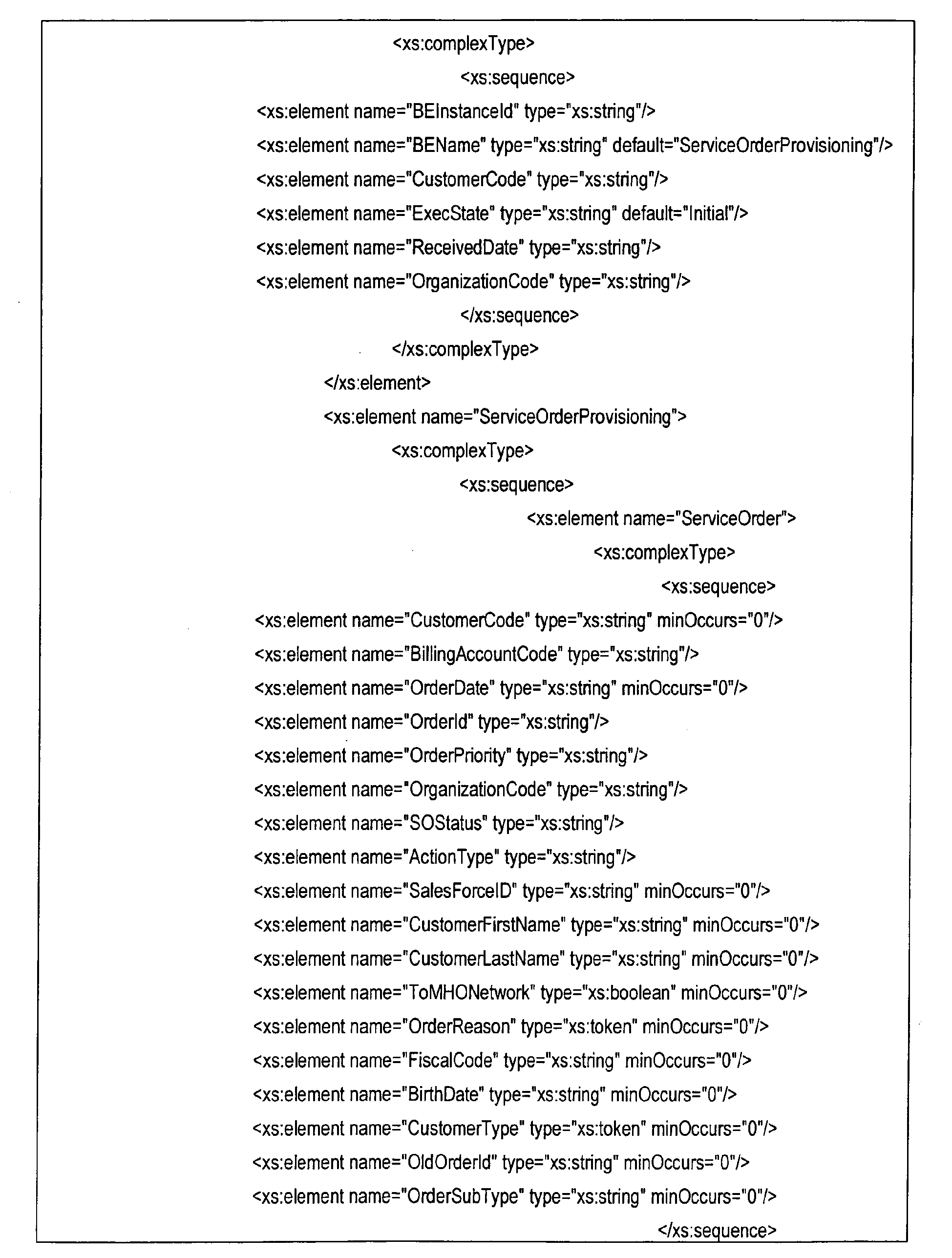

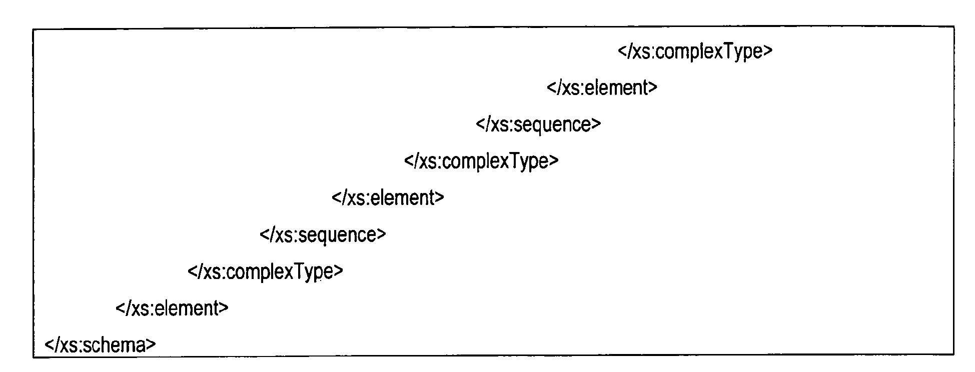

The database poller further parses, validates, and/or transforms each product data string within the order data string against a pre-defined schema (612). The pre-defined schema may be a common data model schema such as that noted above with respect to Figure 5 and receiving the service order structure. Validation errors may be logged for inspection and correction.

The initial service order structure 102 includes both order and product parts. During processing, the parts are split and stored separately. In (610), the poller parses the order part, which is stored in the OrderData table in the OrderXMLData column. In (612), the poller parses the product part, which is stored in the ProductData table in the ProductXMLData column.

The database poller determines whether the retrieved task requires any action (614). The target system corresponding to the database poller may provide action criteria, such as routing logic for calling specific operations. Examples of actions include 'Activation', 'Reactivation', 'ReplaceIMSI', 'ReplaceMSISDN', 'Suspension', and 'TerminateSubscription'.

The database poller may then execute a JDBC update to update the current status of the current product in the Product table 302 from 'Loaded' to 'Processing' (616). The current product is the one identified by the TaskID. The database poller may then call an adapter for the specific target system (618) to execute a selected task on the target system. The database poller may also execute a service order database update (620) that updates the service order database 152 with the current status of the current product, or write error data if an error has occurred. (618) and (620) may be two tasks spawned to run in parallel.

The database poller also writes status information about processing the products into a logger (620). Also, the database poller catches exceptions (622, 624) and may correspondingly update product status (626) and/or write the exception to the logger (628).

As noted above, each database poller may be adapted to the particular processing performed by its corresponding target system. As one example, some target systems may work in conjunction with the order composer logic 224. In such a case, (610) and (612) may be replaced with a call to the composer logic 224. The composer logic 224, in turn, reconstructs a service order provisioning message that may adhere, for example, to the service order hierarchical structure in the original service order structure 102. The reconstructed service order may include those tasks and products specific to the particular target system, or every task and product from the original service order structure 102. The input parameters to the call to the composer logic 224 may include the OrderID and the MainProductID. The output of the composer logic 224 may be a service order envelope built with the main products.

Each target system may handle a specific set of tasks. For example, in addition to the VAS example above, a 'PP' target system may handle actions such as 'AddCustomer', 'ModifyCustomer', 'ChangeUSIM', 'ChangeMSISDN', and 'ModifyStatus'. There may be any number of target systems that implement any specific functionality that interact with the system 200.

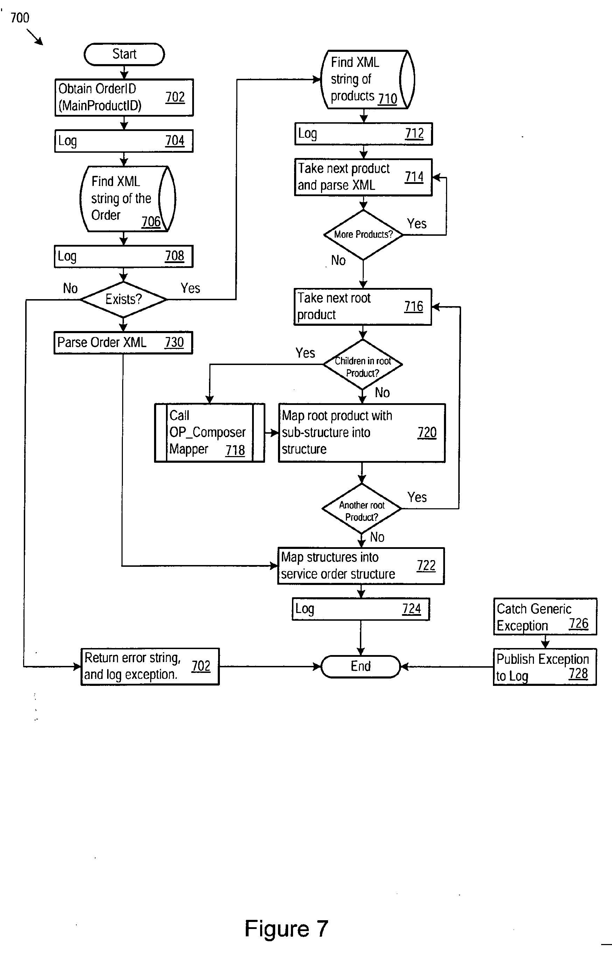

Figure 7 shows a flow diagram 700 of the composer logic 224. At various points in the flow, processing results are logged. This provides a robust fault tolerant processing tracking mechanism for tracking, reviewing, and correcting processing errors. The composer logic 224 may accept the OrderID and ProductID as input variables (702). The input data is logged (704). The output of the composer logic 224 include a service order structure that may adhere to any specified schema, such as the common data model schema noted above and shown in Figure 11. The composer logic 224 may also output an error response string.

Given the OrderID, the composer logic 224 initiates a search for the XML string holding the order (706). For example, the composer logic 224 may initiate execution of a database search in the order data table 304: SELECT * FROM ERRORHANDLER.ORDERDATA WHERE ORDERID=? to find the XML string containing the order data. If there is no corresponding record, the composer logic 224 may output an 'Order not found' error response string. The corresponding record or error response string is logged (708).

An order may have multiple main products, but some target systems only accept one main product at a time. Thus, the system provides the flexibility to rebuild different orders for different target systems. Another option is to build partial orders, where all products have the same action codes; this may be done for systems that can only process one action per order. Furthermore, the status, or even the product data itself may change while provisioning. Once rebuilt with the product information, the order may be resubmitted.

Once the composer logic 224 finds the order, the composer logic 224 may start running in two threads for parallel processing of order XML and product XML, shown by the two "Yes" branches leaving the decision "Exists?" in Figure 7. The first thread parses the order XML (730) and the second thread parses the product XML. The second thread may search the order execution database 152 for each product belonging to the order (710). For example, the composer logic 224 may find the products using the SQL statement:

SELECT ERRORHANDLER.PRODUCTDATA.PRODUCTXMLDATA FROM ERRORHANDLER.PRODUCTDATA WHERE ORDERID =?.

The search results are logged (712). Each product is retrieved sequentially, logged, and parsed (714).

The composer logic 224 then iterates the following logic:

IF

MainProductID is assigned

THEN

iterate on product where MainProductld = ProductInstanceld

ELSE

iterate on products which do not contain ParentOrderltemld (i.e., on main products);

ASSIGN Level := ProductInstanceId[IterationNumber];

Each root product is taken (716). The composer logic 224 checks whether there are children products of the main product (e.g., when NUMBER (products where RootOrderltemID = level) > 1). In other words, apart from iterated main product, more products under this main product exist, i.e., the main product has one or more children. Then each child product's substructure is investigated and mapped under the main product. For this purpose, the composer logic 224 calls the process OP_ComposerMapper (718) with the following inputs: SourceForComposer, the data containing each product retrieved from the database; Level; Product, the iterated main product; Output; and Product, the iterated main product with substructure.

The composer logic checks whether there are no children products of the main product (e.g., when NUMBER (products where RootOrderItemID = level) = 1). If there are no children, the product is ready for mapping. The main products and all lower level children products, with their sub-products are assembled into a product structure (720). After all main products have been processed, the composer logic 224 comes out of iteration and maps structures into a reconstructed service order structure (722). The service order structure output is logged (724), and the composer logic may pass the reconstructed service order structure to the target system. Exceptions which occur during processing are caught (726) and logged (728).

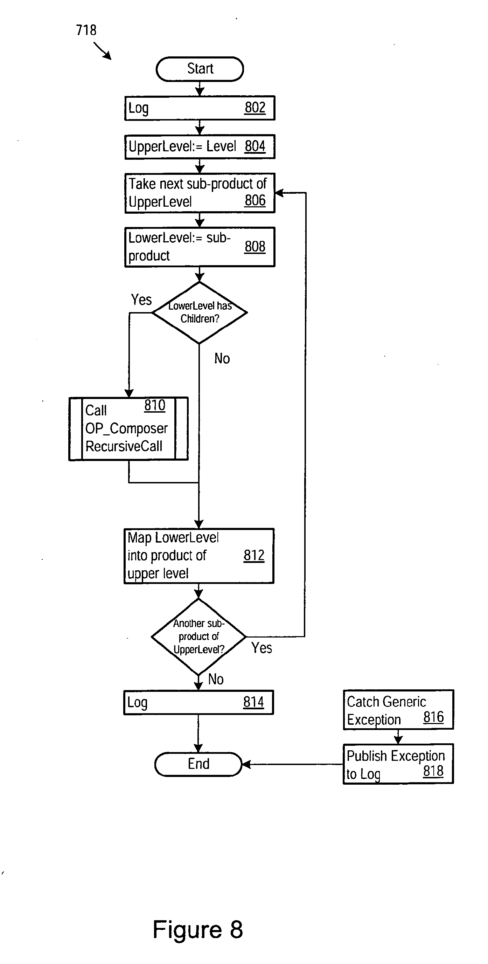

Figure 8 shows an example of a flow diagram 800 for the OP_Composer mapper logic 718. The inputs to the mapper logic 718 may include: SourceForComposer, an XML schema; Level, as a string; and Product, as an XML schema. The output may be a product XML schema. Working variables include: UpperLevel, as a string that represents the product into which a lower level product is going to be mapped; and LowerLevel, as a string that represents the product which is going to be mapped.

The mapper logic 718 logs the input data (802). For clarity, the input Level is referred to as UpperLevel (804). The mapper logic 718 then iterates the following logic:

ITERATE on products where ParentOrderltemld = UpperLevel (806).

Subproduct is taken and marked as LowerLevel: LowerLevel := subproduct[i] (808).

The mapper logic 718 determines whether the lower level product has children (e.g., when NUMBER (products where ParentOrderltemld = LowerLevel) > 0). When the lower level sub-product has children then each child is investigated for substructure and mapped under the lower level sub-product. For this purpose, the mapper logic 718 recursively calls the process OP_ComposerRecursiveCall (810) with the following inputs: SourceForComposer, the data containing each product retrieved from the database, mapped from the start; Level, (the mapped LowerLevel); Product, the processed product of the upper level in which product of lower level is mapped. The outputs may include: Product, the processed product of the upper level in which product of lower level with substructure is mapped. The mapper logic 718 logs the data input to the recursive call, and logs the results returned by the recursive call.

When there are no children (e.g., when NUMBER (products where ParentOrderltemld = LowerLevel) = 0), the lower level product does not contain children. The lower level product is ready to be mapped into the structure of the upper level. Through this iterative process, the mapper logic 718 accumulates all lower level products with substructures.

When the mapper logic 718 comes out of iteration, the mapper logic 718 maps all products of lower level, with substructures, into their upper level product (812). The completed upper level product is logged (814) and returned to the process. Exceptions which occur during processing are caught (816), logged (818) and sent to the calling process.

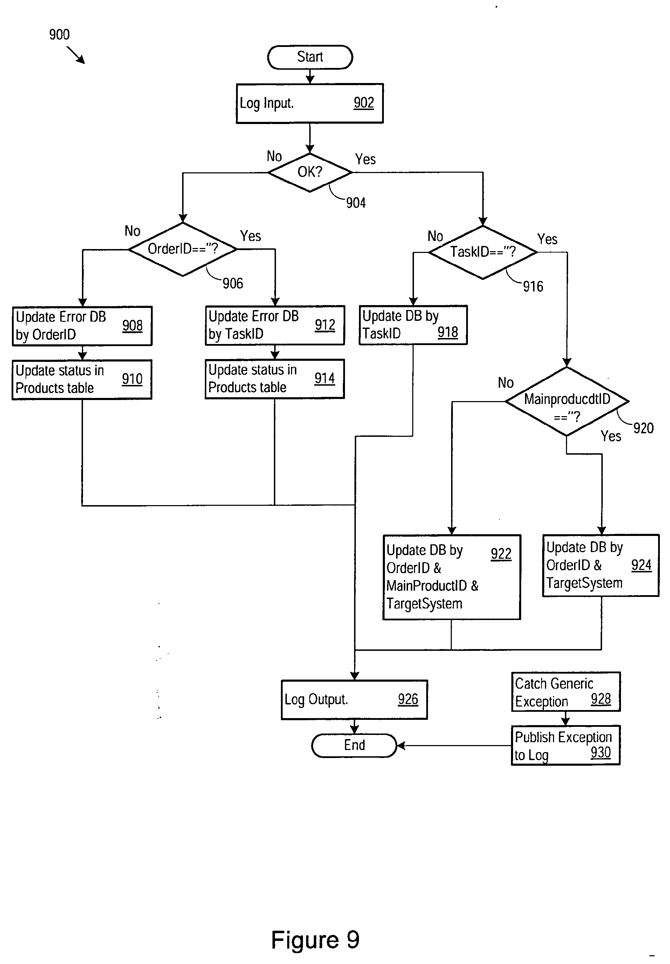

Figure 9 shows an example of a flow diagram 900 for the database updater logic 222. The database updater logic 222 receives its inputs from the target systems 216 and 220 and as described above in the discussion of the pollers, as examples. The database updater logic 222 logs the input that it receives (902). The input may specify an OrderID, TaskID, MainproductID, or other identifiers, as well as a status update applicable to the order, task, and mainproduct, or other entities.

If the status update received indicates that the processing did not complete normally (904), then the database updater logic 222 determines whether an OrderID has been provided (906) (e.g., by determining if the OrderID is Null). If an OrderID has been provided, then the database updater logic 222 updates an error database according to the received OrderID (908) and updates the Products table. In (908), the database updater logic 222 inserts a record into the ErrorData table and in (910), the database updater logic 222 updates the status in the Products table. If an OrderID has not been provided, then the database updater logic 222 then the database updater logic 222 updates an error database according to the received TaskID (912) and updates status in the Products table (914).

When the processing completed normally (904), the database updater logic 222 may determine whether a TaskID has been provided (916). If so, the database updater logic 222 updates the service order database 152 based on the TaskID and status received (918). Otherwise, the database updater logic 222 determines whether the a MainproductlD has been provided (920). If so, the database updater logic 222 updates the service order database 152 based on the OrderID, MainProductID, and the TargetSystem (922). Otherwise, the database updater logic 222 updates the service order database 152 base don the OrderID. and the TargetSystem (924).

The database updater logic 222 logs the output (926) of its operation. Furthermore, the database updater logic 222 catches exceptions (928) and publishes exceptions to a log (930).

The database updater logic 222 may update specific elements of product XML data with data obtained from the target systems after successful completion of a provisioning process. In one implementation, the database updater logic 222 receives the name and value of an element to update from the target system, and updates the product XML data stored in the service order database 152 in the ProductData table 312 in the ProductXMLData column. The database updater logic 222 extracts the product XML data according to the specified ProductlD, updates any defined element in the product XML data with a new value received, and writes the updated XML data into the ProductData table 312 according to ProductID.

In one implementation, the database update logic 222 uses string operations to perform the update. Initially, the database update logic 222 may extract and preserve the namespace prefix of the element which will be updated. With this prefix and the element name, the values of three variables are composed: StartTag = <nsPrefix:ElementName>, EndTag = </nsPrefix:ElementName>, and EmptyTag = <nsPrefix:ElementName/>.

The database updater logic 222 concatenates these variables to obtain the new value of the ProductXMLData string. The EmptyTag variable is used for comparison purposes. The database updater logic 222 queries the service order database 152 to obtain the ProductXMLData by ProductID. The database updater logic 222, as noted above, also extracts as a prefix the namespace of the particular XML element to be udpated and assigns values to the tag structure of temporary values: startTag, String representing opening tag of updated element, endTag, String representing closing tag of updated element, and emptyTag, String representing empty form of updated element.

The database updater logic 222 then concatenates the original XML product data with newly updated element data. The result is an updated XML string containing the concatenation of product data with the updated element. The database updater logic 222 inserts the updated XML string into the database by updating the row specified by the ProductID.

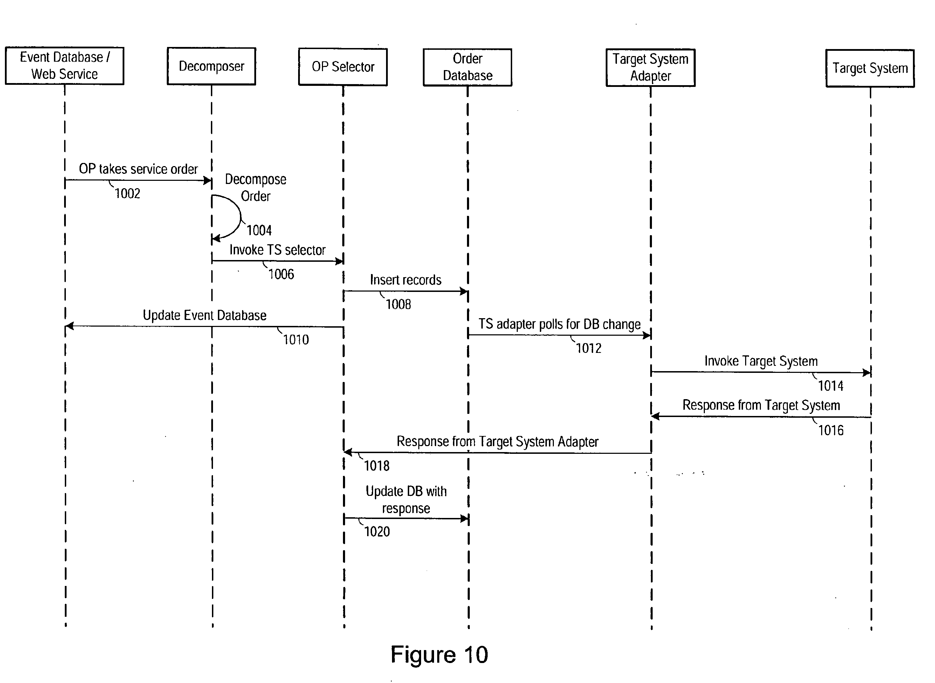

Figure 10 shows a flow diagram 1000 of processing executed by several entities interacting in the dynamic order workflow template instantiator and decoupler system 200. The OP entry point 202 receives the service order structure, stores the service order structure in the event database 214, and provides the service order structure to the OP decomposer 204 (1002). The OP decomposer 204 takes the service order structure decomposes the service order structure into individual products (1004) and invokes the OP selector logic 206 (1006). For each product, the OP selector logic 206 creates extended product vectors and inserts the vectors as individual rows in the Product table 302 in the order execution database 152 (1008). The OP decomposer logic 204 may update the event database 214 with status (1010), such as whether the service order structure was successfully decomposed into individual extended product vectors.

The database pollers check the service order database 152 to find products ready to process (1012). The database pollers retrieve products according to priority as noted above, and invokes the target system to carry out the processing specified by the row retrieved from the Product table (1014). The target systems attempt execute the processing, and return a response (e.g., success or error) (1016). The response is passed back to the OP selector logic 206 (1018), and the OP selector logic 206 may write a corresponding update into the order execution database (1020).

Figure 11 shows an example of a schema 1100 to which the service order structures 102 may adhere. The ProductInstanceID provides a unique ID for each product. The CRMOrderID provides a unique ID for each order that identifies which order the product belongs to. The ParentOrderltemID provides the ProductInstanceID of the parent product. The RootOderltemID provides the ProductInstanceID of the main product (the highest product in the structure).

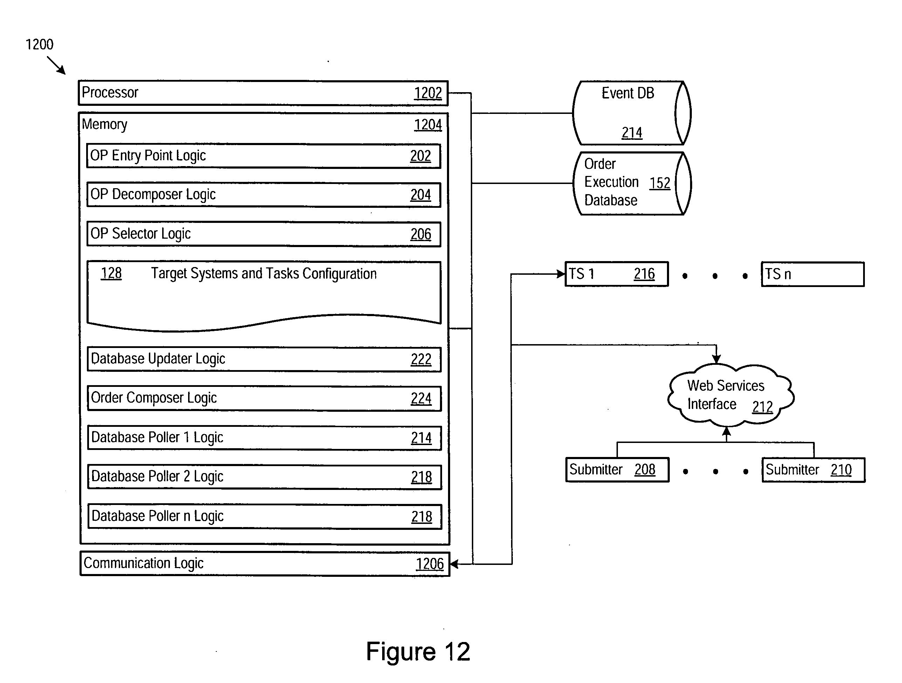

Figure 12 shows an example of a hardware diagram of a processing system 1200 and supporting entities, such as target systems, that may implement the system 200 and the logic described above. The processing system 1200 includes a processor 1202, memory 1204, and communication logic 1206. The memory 1204 holds the programs and processes that implement the logic described above for execution by the processor 1202. As examples, the memory 1204 may store program logic that implements the OP entry point logic 202, OP decomposer logic 204, and the OP selector logic 206. The system 1200 may read the target system and task configuration file 128 into the memory 1204 for parsing.

The systems 200 and 1200 may be implemented in many different ways. For example, although some features are shown stored in computer-readable memories (e.g., as logic implemented as computer-executable instructions or as data structures in memory), all or part of the system and its logic and data structures may be stored on, distributed across, or read from other machine-readable media. The media may include hard disks, floppy disks, CD-ROMs, a signal, such as a signal received from a network or received over multiple packets communicated across the network.

The systems 200 and 1200 may be implemented with additional, different, or fewer components. As one example, a processor may be implemented as a microprocessor, a microcontroller, a DSP, an application specific integrated circuit (ASIC), discrete logic, or a combination of other types of circuits or logic. As another example, memories may be DRAM, SRAM, Flash or any other type of memory. The processing capability of the system may be distributed among multiple components, such as among multiple processors and memories, optionally including multiple distributed processing systems. Parameters, databases, and other data structures may be separately stored and managed, may be incorporated into a single memory or database, may be logically and physically organized in many different ways, and may implemented with different types of data structures such as linked lists, hash tables, or implicit storage mechanisms. Logic, such as programs or circuitry, may be combined or split among multiple programs, distributed across several memories and processors, and may be implemented in a library, such as a shared library (e.g., a dynamic link library (DLL)). The DLL, for example, may store code that prepares intermediate mappings or implements a search on the mappings. As another example, the DLL may itself provide all or some of the functionality of the system, tool, or both.

As one specific example, the processing executed by the logic described above may be implemented with one or more Tibco(TM) BusinessWorks (TM) processes. The processes may execute in any environment that supports the Tibco (TM) BusinessWorks (TM) system. Examples of such environments include computer systems running the Windows (TM) operating system and the Unix (TM) operating system.

The systems may further include multiple aspect task tracking. Such tracking may include an external identifier aspect of tracking tasks by highly configurable external identifiers. Another aspect, an error aspect, includes tracking errors that occur as the target systems attempt to execute tasks, and categorizing those errors into groups. The multiple aspect tracking provides detailed insight into the status of each task, helping to solve the technical problem of implementing orderly execution of complex product requests while maintaining a transparent view of execution status at each stage of task execution, from being newly loaded into the Products table 302, through completion or failure because of errors. The multiple aspect task tracking features eliminate the burden of manually searching through complex log files to determine task status. Furthermore, the distinction of errors into groups facilitates customized handling of different types of errors. Accordingly, the systems may implement different error resolution paradigms responsive to the error group assigned to an error. Such processing helps solve the technical challenge of determining and executing the appropriate corrective action for any given error.

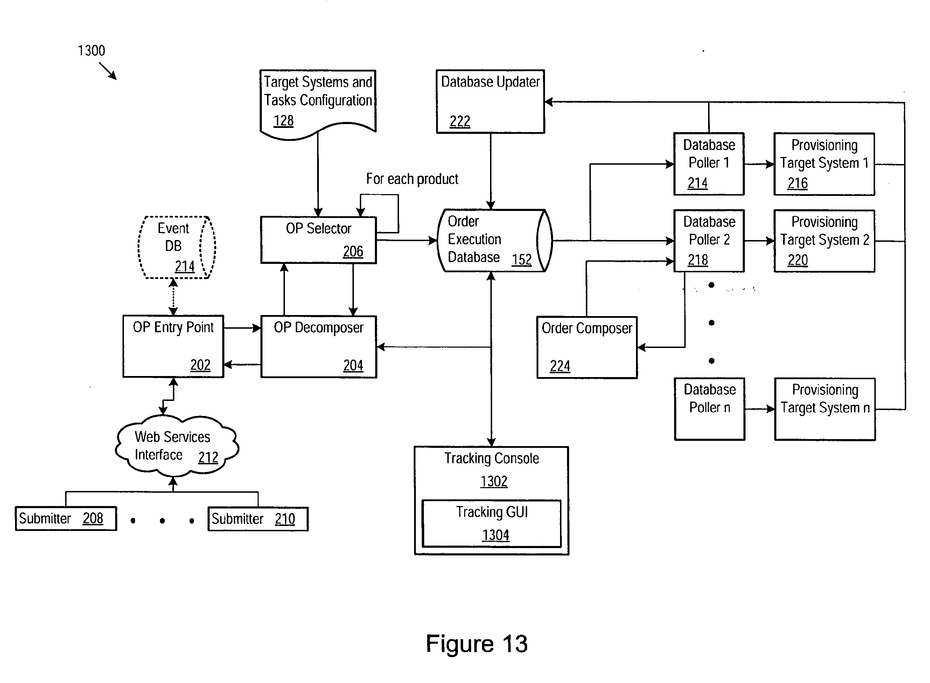

Figure 13 illustrates a system 1300 that includes a tracking console 1302. The tracking console 1302 generates a tracking interface 1304. The tracking interface 1304 may be a graphical user interface that displays the tracking aspects stored in the order execution database 152. An operator may interact with the system through the tracking console 1302 to view task execution status, correct errors reported in the error data table 308, resubmit tasks for execution, modify tasks, and take other actions. Certain operations may be automatic, however, such as resubmitting tasks for execution when connection errors occur.

The multiple aspect tracking features are supported by the Error Data table 308 and the task Tracking Table 306 shown in Figure 2. Recall that for each task on each target system, an individual row is written into the Products table 302. The row in the Products table 302 includes a Status field. Examples of values that the pollers, target systems, or other entities may store in the Status field include: 'New', the row is newly inserted into the Products table 302; 'Loaded', a poller has extracted the row, but not yet sent the task to a target system; 'Processing', the poller has sent the task to the target system for processing; 'Completed', indicating that the task was successfully processed by the target system; and 'Failed', the task was unable to be processed.

Regarding the error aspect of tracking, when task execution has failed, the poller for the target system that should have executed the task may instruct the database updater logic 222 to write an error record into the Error Data table 308. For example, for a connection error that results in task execution failure, the poller may write an error record specifying a connection error. As another example, when an application error occurs on the target system, the target system may return an error code and description to the poller or database updater logic 222, either of which may then write a corresponding error record into the Error Data table 308.

The error record may include the data fields described above with regard to the Error Data table 308. For example, the ErrorCode field may be populated with an error identifier returned by the target system when an application error has occurred. The error identifier may therefore reflect an application specific error code that reflects why the application was unable to process the task. For a connection error, the poller, based on pre-configured error data in the poller, determines the error code to write. The ErrorDescription field provides, for example, a plain text error message that describes the error that has occurred. The error message may be provided by the target system or poller. The ErrorTime field stores a timestamp that notes when the error occurred.

The error record may also populate the ErrorTypeGroup field with a group specifier. The group specifier may distinguish between pre-defined error types. As two examples, the pre-defined error types may be 'Application' and 'Connection'. For an Application error, the poller was able to submit the task to the correct target system. However, the application responsible for executing the task on the target system was unable to successfully process the task. There may be many reasons why the target system was unable to complete the task, such as lack of processing resources, incorrect data specified in the task, and other reasons. Because application errors are often more complex to analyze and correct, the systems may write the error record into the Error Data table 308 without resubmitting the task for execution. Instead, an operator may analyze the error record, make corrections or take other remedial actions, then instruct the system to resubmit the task.

For a Connection error, the poller was unable to reach the target system that the task was intended for. A Connection error may occur when a communication channel with the target system could not be established. Connection errors may occur when there is a network outage, when the target system is down, or under other conditions. The systems may automatically apply a pre-configured task execution retry ruleset to tasks with Connection errors. For example, the retry ruleset may specify that the pollers will automatically retry task execution 'n' times, at 't' minute intervals. One example is retrying 3 times with 5 minute intervals between retries.

A task execution retry ruleset may be established for Connection errors, Application errors, or any other type of error type group. For example, the application error task execution retry ruleset may specify taking corrective steps with the application that failed to process a task. Examples of corrective steps include instructing the application to retry processing, instructing the application to retry processing using specified parameters or processing techniques, specifying how many times to retry, how frequently to retry, or any other corrective steps.

Each time a task fails, the systems may add a new row into the Error Data table 308. As noted above, each row provides a record of when the task was tried and why it failed. One beneficial result is that the Error Data table 308 provides a complete history of the errors encountered by any given task.

Regarding the external identifier aspect of tracking, the task Tracking Table 306 provides alias fields for TaskIDs. In particular, the task Tracking Table 306 permits any number of ExternallDs to be attached to any given TaskID. The ExternalIDs may be any identifier that is useful for specifying a given task. As examples, the external identifiers may be social security numbers, MSIDSN numbers, external system identifiers, phone numbers, subscription numbers, or any other identifier that provides an alternate identifier for the task.

The Tracking Table 306 further permits specifying the type of external identifier (e.g., phone number, external system identifier, or tax identifier) using the ExternallDType field. As a result, the system supports searching for the execution status of a given task by multiple different aliases. Accordingly, when it is necessary to know what tasks are pending for a particular MSISDN number, the systems may establish MSDISN external identifiers for each task in the Tracking Table 306.

In one implementation, the pollers populate the Tracking Table 306. For example, a poller may write a row into the Tracking Table 306 that specifies the target system identifier as an ExternalID for the TaskID. A target system may provide the target system identifier as, for example, a callback to the poller after receiving the task execution request from the poller. Accordingly, the Tracking Table 306 provides a technical solution for readily determinig which external target systems are processing which tasks for which product.

As examples, an operator may search for execution status based on an MSISDN identifier, tax identifier, target system identifier, or any other external identifier linked to the TaskID through the Tracking Table 306. Given any number of TaskID matches to the external identifier, the operator may then search the Products Table 302, Error Data Table 308, or other tables to find the exact status for the tasks matching the TaskIDs.

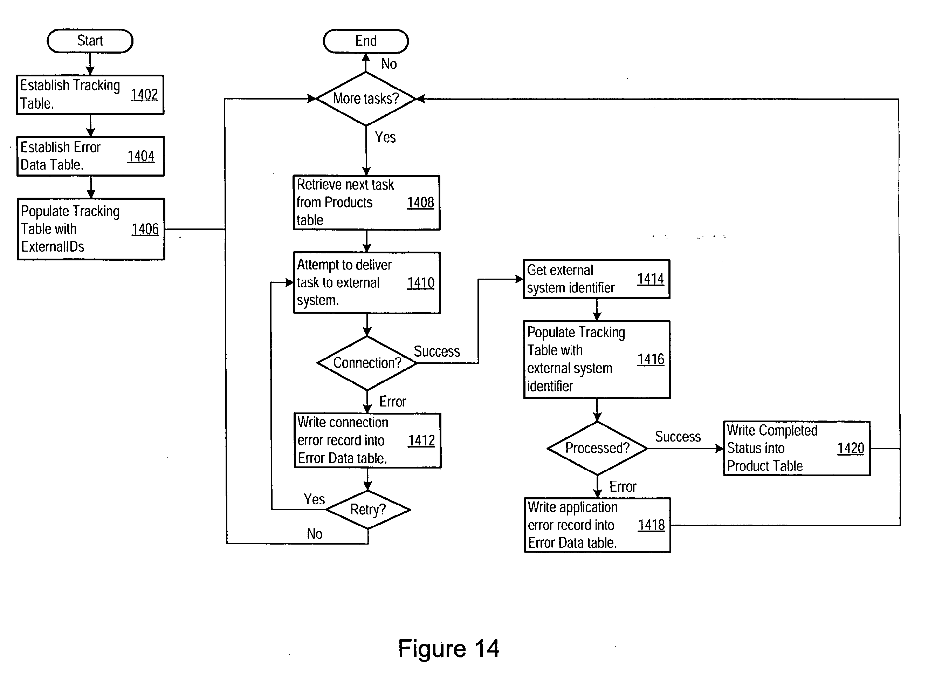

Figure 14 shows a flow diagram 1400 for multiple aspect task tracking logic. The systems establish a Tracking Table 306 (1402), an Error Data Table 308 (1404), and any other tables desired for tracking the processing of tasks and products. As noted above, the systems may also populate the Tracking Table 306 with any desired external identifiers to provide aliases for system generated TaskIDs (1406).

While there are more tasks to execute, the pollers retrieve the next task (1408). Each poller attempts to deliver the tasks it retrieves to a designated target system (1410). When a connection error occurs, the poller writes a connection error record into the Error Data table 308 (1412). As noted above, the poller may retry submission of the task at any configured interval and number of times.

When the task is delivered successfully to the target system, the poller may obtain from the target system an external system identifier (1414). The external system identifier may be an identifier for the target system itself, for the task as assigned by the target system, or another type of external system identifier. The poller populates the Tracking Table 306 with the external system identifier (1416).

The target system attempts to process any task delivered to it by a poller. When the target system successfully executes a task, the target system may return a successful completion message to the poller or database updater logic 222. The system accordingly writes a 'Completed' status into the Products Table 302 for the task. However, when the target system encounters an error trying to process the task, the target system returns error information to the poller or database updater logic 222. The error information may include an error identifier, error description, error time, or other error information. The system (e.g., the database updater logic 222, the pollers, or other logic in the system) may use the error information to lookup a corresponding error type group matching the error information. These error characteristics may form the error record that the system writes into the Error Data table 308 (1418).

While various embodiments of the invention have been described, it will be apparent to those of ordinary skill in the art that many more embodiments and implementations are possible within the scope of the invention. Accordingly, the invention is not to be restricted except in light of the attached claims and their equivalents.

According to another aspect, a product may comprise: a computer readable medium; order processor decomposer logic stored on the medium and configured to generate a non-hierarchical product list from the service order structure by decomposing the service order structure into individual product-action entries that comprise the non-hierarchical product list; and target system selector logic stored on the medium and configured to: select a first individual product-action entry from the non-hierarchical product list; locate in a vectorization file a task sequence list matching the first individual product-action entry and specifying target systems and tasks for implementation of the first individual product-action entry; create extended product vectors for implementing the first individual product-action entry, each extended product vector comprising a target system identifier, a target system priority, a task identifier, and a task priority specified by the task sequence list; and write the extended product vectors as individual rows in the order execution database.

According to yet another aspect, the extended product vectors may comprise: individual extended product vectors for each task specified in the task sequence list.

According to yet another aspect, the vectorization file may comprise a sequence of product structures and/or action type structures within each product structure.

According to yet another aspect, the action type structures may comprise: an 'Add' structure; an 'Update' structure; a 'Suspend' structure; a 'Delete' structure, and/or any combination thereof.

According to yet another aspect, where the action type structures may comprise individual target system structures.

According to yet another aspect, where the individual target system structures may comprise: a target system name field; a target system priority field; and/or individual task structures.

According to yet another aspect, where individual task structures may comprise: a task name field; and/or a task priority field.

## Claims

1. A computer-implemented method for service order decomposition, the method comprising:
receiving a service order structure;
generating a non-hierarchical product list from the service order structure by decomposing the service order structure into individual product-action entries that comprise the non-hierarchical product list;
selecting a first individual product-action entry from among the individual product-action entries in the non-hierarchical product list;
locating in a vectorization file a task sequence list matching the first individual product-action entry and specifying target systems and tasks for implementation of the first individual product-action entry;
creating extended product vectors for implementing the first individual product-action entry, each extended product vector comprising a target system identifier, a target system priority, a task identifier, and a task priority specified by the task sequence list; and
writing the extended product vectors as individual rows in an order execution database.

2. The method of claim 1, where creating comprises:
creating an individual extended product vector for each task specified in the task sequence list.

3. The method of claim 1 or 2, where the vectorization file comprises a sequence of product structures and/or action type structures within each product structure.

4. The method of claim 3, where the action type structures comprise:
an 'Add' structure;
an 'Update' structure;
a 'Suspend' structure;
a 'Delete' structure, and/or any combination thereof.

5. The method of claim 3 or 4, where the action type structures comprise individual target system structures.

6. The method of claim 5, where the individual target system structures comprise:
a target system name field;
a target system priority field; and/or
individual task structures.

7. The method of claim 6, where individual task structures comprise:
a task name field; and/or
a task priority field.

8. A service order decomposition computer system comprising:
an order execution database;
a communication interface configured to receive a service order structure;
order processor decomposer logic configured to generate a non-hierarchical product list from the service order structure by decomposing the service order structure into individual product-action entries that comprise the non-hierarchical product list; and
target system selector logic configured to:
select a first individual product-action entry from the non-hierarchical product list;
locate in a vectorization file a task sequence list matching the first individual product-action entry and specifying target systems and tasks for implementation of the first individual product-action entry;
create extended product vectors for implementing the first individual product-action entry, each extended product vector comprising a target system identifier, a target system priority, a task identifier, and a task priority specified by the task sequence list; and
write the extended product vectors as individual rows in the order execution database.

9. The service order decomposition system of claim 8, where the extended product vectors comprise:
individual extended product vectors for each task specified in the task sequence list.

10. The service order decomposition system of claim 8 or 9, where the vectorization file comprises a sequence of product structures and/or action type structures within each product structure.

11. The service order decomposition system of claim 10, where the action type structures comprise:
an 'Add' structure;
an 'Update' structure;
a 'Suspend' structure;
a 'Delete' structure, and/or any combination thereof.

12. The service order decomposition system of claim 10 or 11, where the action type structures comprise individual target system structures.

13. The service order decomposition system of claim 12, where the individual target system structures comprise:
a target system name field;
a target system priority field; and/or
individual task structures.

14. The service order decomposition system of claim 13, where individual task structures comprise:
a task name field; and/or
a task priority field.

15. Computer program product comprising computer readable instructions, which when loaded and run in a computer and/or computer network system, causes the computer system and/or the computer network system to perform operations according to a method of any one of claims 1 to 7.
